# EUROPEAN PATENT APPLICATION

(11) **EP 4 322 269 A1**
(43) Date of publication of application: **14.02.2024**
(21) Application number: 22784721.7
(22) Date of filing: 07.04.2022
(51) Int. Cl.: H01M 10/04, H01G 11/78, H01M 10/058, H01M 10/52, H01M 50/474, H01M 50/483, H01M 50/486, H01M 50/489

(54) **RESIN FILM FOR POWER STORAGE DEVICE, AND POWER STORAGE DEVICE**

(30) Priority: 07.04.2021 JP 2021065529; 07.04.2021 JP 2021065531
(71) Applicant: DAI NIPPON PRINTING CO., LTD., Tokyo 162-8001 (JP)
(72) Inventor: OKANO, Ai, Tokyo 162-8001 (JP); TAKEUCHI, Naoya, Tokyo 162-8001 (JP); TSUNEDA, Hiroki, Tokyo 162-8001 (JP); SASAKI, Miho, Tokyo 162-8001 (JP)
(74) Representative: Müller-Boré & Partner Patentanwälte PartG mbB
(86) International application number: PCT/JP2022/017314
(87) International publication number: WO 2022/215739

(57) **Abstract**

The present invention provides a resin film for a power storage device that is arranged between an exterior material of a power storage device and a power storage device element, the resin film for a power storage device including a water absorbent.

## Description

### TECHNICAL FIELD

The present disclosure relates to a resin film for electrical storage devices and an electrical storage device.

### BACKGROUND ART

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, heretofore a film-shaped laminate with a base material layer, a barrier layer, an adhesive layer and a heat-sealable resin layer laminated in this order has been proposed as an exterior material for electrical storage devices which is easily processed into diversified shapes and is capable of achieving thickness reduction and weight reduction (see, for example, Patent Document 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed to obtain an electrical storage device with electrical storage device elements housed in the exterior material for electrical storage devices.

### PRIOR ART DOCUMENT

### PATENT DOCUMENT

Patent Document 1: Japanese Patent Laid-open Publication No. 2008-287971

### SUMMARY OF THE INVENTION

### PROBLEMS TO BE SOLVED BY THE INVENTION

Ingress of moisture to the inside of an electrical storage device (electrical storage device element) deteriorates the performance of the electrical storage device. For this reason, for example, when the above-described film-shaped laminate is used as an exterior material, a barrier layer (including, for example, a metal foil) is provided. By providing a barrier layer, ingress of moisture from the outside of the barrier layer can be suppressed.

However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside.

If the heat-sealable resin layer of the exterior material absorbs water before the electrical storage device element is sealed with the exterior material, moisture in the heat-sealable resin layer may enter the electrical storage device element after the electrical storage device element is sealed.

Under these circumstances, a main object of a first embodiment of the present disclosure is to provide a technique for suppressing ingress of moisture to the inside of an electrical storage device.

The exterior material including a film-shaped laminate is provided with a barrier layer (including, for example, a metal foil). By providing a barrier layer, ingress of moisture from the outside of the barrier layer can be suppressed.

However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside. If the heat-sealable resin layer of the exterior material absorbs water before the electrical storage device element is sealed with the exterior material, moisture in the heat-sealable resin layer may enter the electrical storage device element after the electrical storage device element is sealed.

For example, when the electrical storage device is an all-solid-state battery including a sulfide-based inorganic solid electrolyte, or a lithium secondary battery in which lithium-sulfur is used for a positive electrode, ingress of moisture to the inside of the electrical storage device may cause an increase in internal pressure of the electrical storage device due to generation of a sulfur-based gas, resulting in breakage of the electrical storage device.

Under these circumstances, a main object of a second embodiment of the present disclosure is to provide a technique for absorbing a sulfur-based gas generated inside an electrical storage device.

### MEANS FOR SOLVING THE PROBLEM

The inventors of the present disclosure have extensively conducted studies for achieving the object of the first embodiment. As a result, it has been found that by disposing a resin film for electrical storage devices, which contains a water absorbent, between an exterior material of an electrical storage device and an electrical storage device element, ingress of moisture to the inside of the electrical storage device can be suitably suppressed.

The first embodiment of the present disclosure has been completed by further conducting studies based on the above-mentioned findings. That is, the present disclosure provides an invention of an aspect as described below.

A resin film for electrical storage devices which is disposed between an exterior material of an electrical storage device and an electrical storage device element, the resin film including a water absorbent.

The inventors of the present disclosure have extensively conducted studies for achieving the object of the second embodiment. As a result, it has been found that by disposing a resin film for electrical storage devices, which contains a sulfur-based gas absorbent, between an exterior material of an electrical storage device and an electrical storage device element a sulfur-based gas generated inside the electrical storage device can be absorbed.

The second embodiment of the present disclosure has been completed by further conducting studies based on the above-mentioned findings. That is, the present disclosure provides an invention of an aspect as described below.

A resin film for electrical storage devices which is disposed between an exterior material of an electrical storage device and an electrical storage device element, the resin film including a sulfur-based gas absorbent.

### ADVANTAGES OF THE INVENTION

According to the first embodiment of the present disclosure, it is possible to provide a technique for suppressing ingress of moisture to the inside of an electrical storage device. According to the first embodiment of the present disclosure, it is also possible to provide an electrical storage device obtained by utilizing the technique.

According to the second embodiment of the present disclosure, it is possible to provide a technique for absorbing a sulfur-based gas generated inside an electrical storage device. According to the second embodiment of the present disclosure, it is also possible to provide an electrical storage device utilizing the technique.

### BRIEF DESCRIPTION OF THE DRAWINGS

Fig. 1 is a schematic diagram showing an example of a cross-sectional structure of a resin film for electrical storage devices according to the present disclosure.
Fig. 2 is a schematic diagram showing an example of a cross-sectional structure of a resin film for electrical storage devices according to the present disclosure.
Fig. 3 is a schematic diagram showing an example of a cross-sectional structure of a resin film for electrical storage devices according to the present disclosure.
Fig. 4 is a schematic diagram showing an example of a cross-sectional structure of an exterior material used for an electrical storage device of the present disclosure.
Fig. 5 is a schematic diagram showing an example of a cross-sectional structure of an electrical storage device of the present disclosure.
Fig. 6 is a schematic diagram showing an example of a cross-sectional structure of an electrical storage device of the present disclosure.
Fig. 7 is a schematic diagram showing an example of a cross-sectional structure of an electrical storage device of the present disclosure.
Fig. 8 is a schematic diagram showing an example of a cross-sectional structure of an electrical storage device of the present disclosure.
Fig. 9 is a schematic diagram showing an example of a cross-sectional structure of an electrical storage device of the present disclosure.
Fig. 10 is a schematic perspective view showing an example of an electrical storage device of the present disclosure.
Fig. 11 is a schematic diagram showing an example of a cross-sectional structure of an electrical storage device of the present disclosure.

### EMBODIMENTS OF THE INVENTION

A resin film for electrical storage devices according to a first embodiment of the present disclosure is disposed between an exterior material of an electrical storage device and an electrical storage device element, and contains a water absorbent. Such a configuration of the resin film for electrical storage devices according to the present disclosure enables suppression of ingress of moisture to the inside of the electrical storage device.

A resin film for electrical storage devices according to a second embodiment of the present disclosure is disposed between an exterior material of an electrical storage device and an electrical storage device element, and contains a sulfur-based gas absorbent. Such a configuration of the resin film for electrical storage devices according to the present disclosure enables absorption of a sulfur-based gas generated inside the electrical storage device.

Hereinafter, the resin film for electrical storage devices according to the present disclosure will be described in detail. In the present disclosure, a numerical range indicated by the term "A to B" means "A or more" and "B or less". For example, the expression of "2 to 15 mm" means 2 mm or more and 15 mm or less.

In the following description, matters common to the first and second embodiments of the present disclosure will be appropriately collectively described as matters related to the present disclosure, and matters related to the first or second embodiments will be described while being specified as matters related to the first or second embodiments.

### 1. Resin film for electrical storage devices

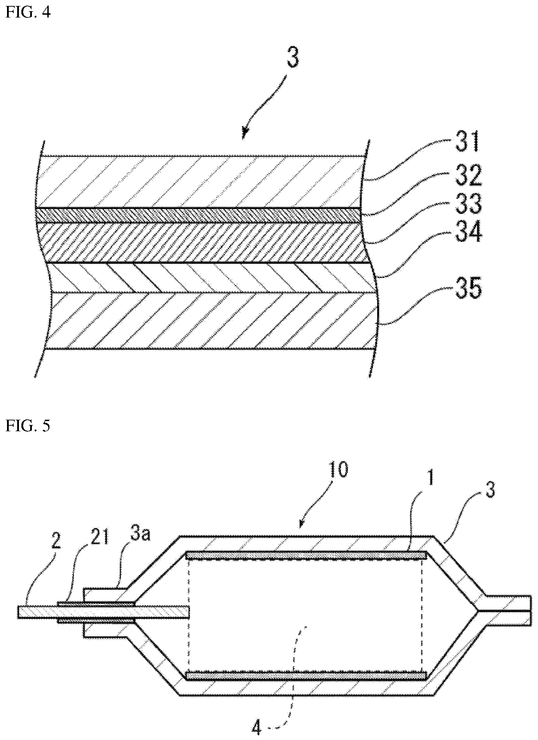

The resin film for electrical storage devices according to the first embodiment of the present disclosure includes a resin film containing a water absorbent. That is, the resin film for electrical storage devices according to the first embodiment of the present disclosure is a resin film containing a water absorbent and a resin. As shown in schematic diagrams of Figs. 5 to 11, a resin film 1 for electrical storage devices according to the present disclosure is disposed between an exterior material 3 of an electrical storage device and an electrical storage device element 4.

As described above, ingress of moisture to the inside of an electrical storage device (electrical storage device element) deteriorates the performance of the electrical storage device, and therefore the film-shaped exterior material is provided with a barrier layer (including, for example, a metal foil). By providing a barrier layer, ingress of moisture from the outside of the barrier layer can be suppressed. However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside. If the heat-sealable resin layer of the exterior material absorbs water before the electrical storage device element is sealed with the exterior material, moisture in the heat-sealable resin layer may enter the electrical storage device element after the electrical storage device element is sealed.

To address this, the resin film 1 for electrical storage devices according to the first embodiment of the present disclosure is disposed between the exterior material 3 of the electrical storage device 10 and the electrical storage device element 4 to effectively suppress ingress of moisture from an end part of the heat-sealable resin layer of the exterior material and ingress of moisture contained in the heat-sealable resin layer of the exterior material. That is, since the resin film 1 for electrical storage devices according to the first embodiment of the present disclosure contains a water absorbent, the resin film 1 for electrical storage devices can absorb and hold moisture entering from the heat-sealable resin layer of the exterior material to inhibit moisture from reaching the electrical storage device element 4.

The resin film for electrical storage devices according to the second embodiment of the present disclosure includes a resin film containing a sulfur-based gas absorbent. That is, the resin film for electrical storage devices according to the second embodiment of the present disclosure is a resin film containing a sulfur-based gas absorbent and a resin. As shown in schematic diagrams of Figs. 5 to 11, the resin film 1 for electrical storage devices according to the second embodiment of the present disclosure is disposed between the exterior material 3 of the electrical storage device and the electrical storage device element 4.

As described above, ingress of moisture to the inside of the electrical storage device (electrical storage device element) may cause an increase in internal pressure of the electrical storage device due to generation of a sulfur-based gas, resulting in breakage of the electrical storage device. By providing the film-shaped exterior material with a barrier layer (including, for example, a metal foil), ingress of moisture from the outside of the barrier layer can be suppressed. However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside. If the heat-sealable resin layer of the exterior material absorbs water before the electrical storage device element is sealed with the exterior material, moisture in the heat-sealable resin layer may enter the electrical storage device element after the electrical storage device element is sealed.

To address this, the resin film 1 for electrical storage devices according to the second embodiment of the present disclosure is disposed between the exterior material 3 of the electrical storage device 10 and the electrical storage device element 4 to suitably absorb a sulfur-based gas generated due to ingress of moisture to the inside of the electrical storage device 10. That is, the resin film 1 for electrical storage devices according to the second embodiment can absorb the sulfur-based gas to suppress an increase in internal pressure of the electrical storage device because the resin film 1 for electrical storage devices contains a sulfur-based gas absorbent.

In the first embodiment of the present disclosure, the moisture to be absorbed is moisture from gas and/or liquid. As described later, the resin film for electrical storage devices according to the first embodiment of the present disclosure may also target a sulfur-based gas for absorption if necessary. Examples of the sulfur-based gas include hydrogen sulfide, dimethyl sulfide, methyl mercaptan, and sulfur oxide represented by SOx. The moisture to be absorbed generates various kinds of outgas when absorbed by, for example, a solid electrolyte-type lithium ion battery, and the sulfur-based gas is a component of outgas (for example, generated when the electrical storage device is an all-solid-state battery using a sulfide-based inorganic solid electrolyte, or a lithium secondary battery in which lithium-sulfur is used for the positive electrode).

As shown in, for example, Figs. 5 to 11, the electrical storage device 10 of the present disclosure has a structure in which the electrical storage device element 4 is sealed with the exterior material 3. A metal terminal 2 protrudes to the outside of the exterior material 3. The metal terminal 2 is connected to each of a positive electrode and a negative electrode of the electrical storage device element 4. An adhesive film 21 for metal terminal is disposed between the metal terminal 2 and the exterior material 3 to enhance adhesion between the metal terminal 2 and a heat-sealable resin layer 35 of the exterior material. The electrical storage device 10 is sealed by covering the electrical storage device element 4 with the exterior material 3 in such a manner as to allow formation of a flange portion of the exterior material 3 (a peripheral edge portion 3a of the exterior material 3) on the peripheral edge of the electrical storage device element 4, and heat-sealing the flange portion of the exterior material 3 to perform tight sealing. When the electrical storage device element 4 is housed using the exterior material 3, the heat-sealable resin layer 35 of the exterior material 3 is on the inner side (a surface contacting the electrical storage device element 4).

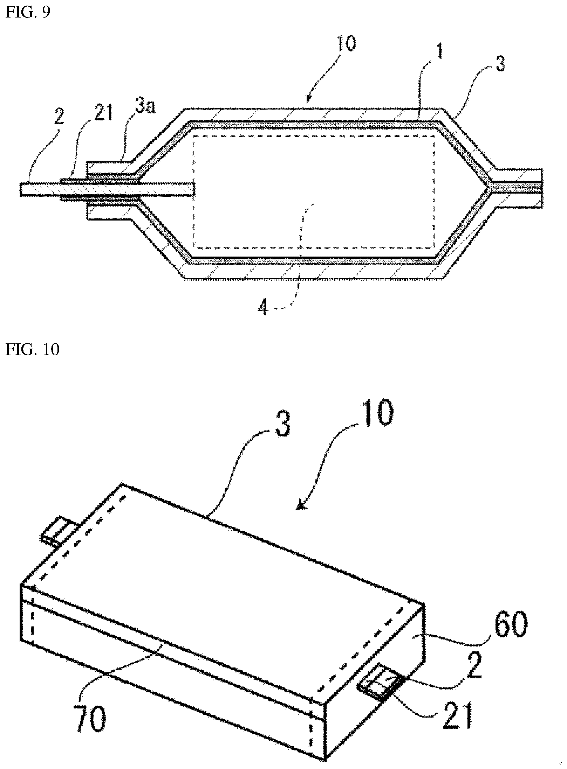

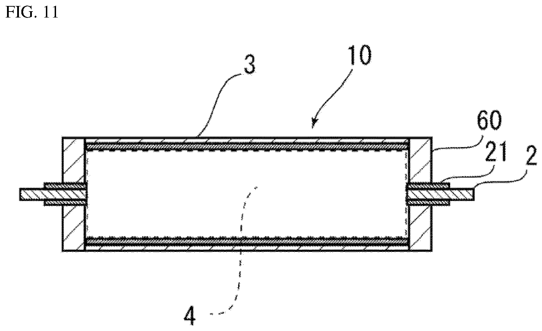

As shown in Figs. 10 and 11, the exterior material 3 for electrical storage devices is wound around the circumference of the electrical storage device element 4 (circumferential winding) (rectangular parallelepiped shape in Figs. 10 and 11) such that the heat-sealable resin layer of the exterior material 3 is on the inner side, the heat-sealable resin layers are heat-sealed to each other to form a heat-sealed portion 70, and a lid 60 is disposed so as to close the openings at both ends. The resin film 1 for electrical storage devices according to the present disclosure may be disposed between the lid 60 of the exterior material 3 of the electrical storage device and the electrical storage device element 4. Here, the lid 60 forms a part of the exterior material 3 for electrical storage devices, and the resin film 1 for electrical storage devices according to the present disclosure is disposed between the exterior material 3 and the electrical storage device element 4.

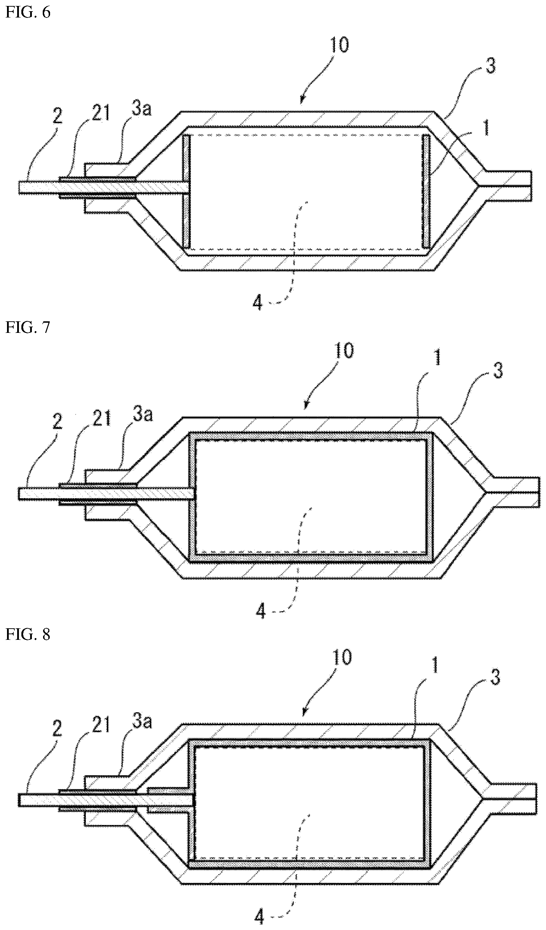

When the resin film 1 for electrical storage devices according to the present disclosure is applied to the electrical storage device 10, the resin film 1 for electrical storage devices may be located on the whole of a surface of the exterior material 3 on the electrical storage device element 4 side (heat-sealable resin layer 35 side), or may be located on a part of the surface on the electrical storage device element 4 side (heat-sealable resin layer 35 side). From the viewpoint of suitably exhibiting the effect of the present disclosure, it is preferable that the resin film 1 for electrical storage devices is disposed between the exterior material 3 of the electrical storage device 10 and the electrical storage device element 4 in such a manner as to be located on the whole of a surface of the exterior material 3 on the electrical storage device element 4 side (heat-sealable resin layer 35 side) (see Figs. 5 to 9 and 11). For example, the resin film 1 for electrical storage devices may be disposed only between the exterior material 3 for electrical storage devices and the electrical storage device element 4 as shown in Figs. 5 and 11, or may be disposed between the exterior material peripheral edge portion 3a (heat-sealed portion) of the exterior material 3 and the electrical storage device element 4 as shown in Fig. 6, or the electrical storage device element 4 may be covered with the resin film 1 for electrical storage devices as shown in Fig. 7, and a part of a surface of the metal terminal 2 may be further covered with the resin film 1 for electrical storage devices as shown in Fig. 8. Further, as shown in Fig. 9, it is also possible to dispose the resin film 1 for electrical storage devices according to the present disclosure between the exterior material 3 of the electrical storage device 10 and the electrical storage device element 4 such that the electrical storage device element 4 is sealed by the resin film 1 for electrical storage devices. The resin film 1 for electrical storage devices may be present between the exterior material 3 and the metal terminal 2 in a state of being hear-sealed.

When the resin film 1 for electrical storage devices is located at the flange portion of the exterior material 3 (the peripheral edge portion 3a of the exterior material 3), it is preferable that the resin film 1 for electrical storage devices has a heat-sealing property. For example, in the schematic diagram of Fig. 9, the resin film 1 for electrical storage devices is located at the flange portion to which the exterior material 3 is heat-sealed, and therefore it is preferable that the resin film 1 for electrical storage devices has a property of being heat-sealed to the heat-sealable resin layer 35 and the adhesive film 21 for metal terminal. It is preferable that the resin films 1 for electrical storage devices have a property of being heat-sealed to each other.

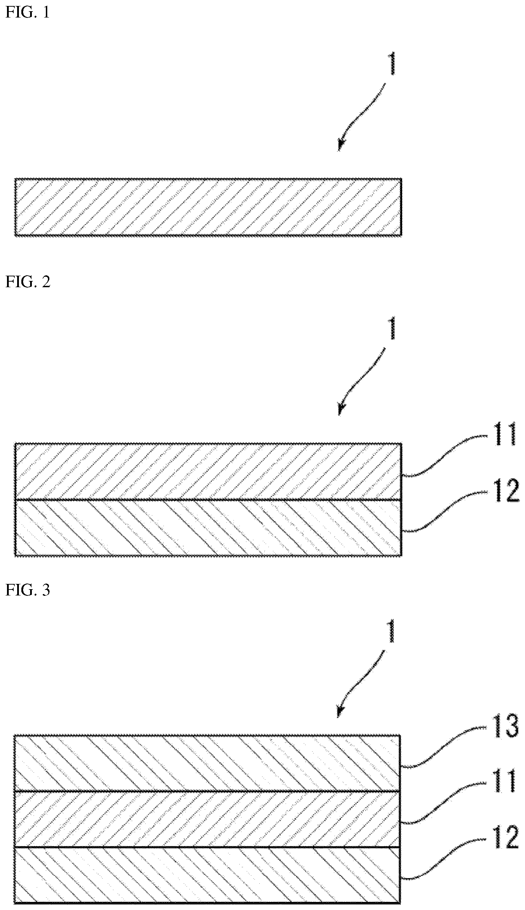

The resin film 1 for electrical storage devices according to the present disclosure may be a single layer as shown in, for example, Fig. 1, or may have two or more layers, as shown in, for example, Figs. 2 and 3. Fig. 2 shows a resin film 1 for electrical storage devices which includes a laminate in which a first layer 11 and a second layer 12 are laminated, and Fig. 3 shows a resin film 1 for electrical storage devices which includes a laminate in which the first layer 11, the second layer 12 and a third layer 13 are laminated in this order.

In the first embodiment, when the resin film 1 for electrical storage devices has two or more layers, it is only necessary that at least one of the two or more layers contain a water absorbent. In the present disclosure, a layer containing a water absorbent is sometimes referred to as a "water absorbing layer". Specific examples of the laminated configuration of the resin film 1 for electrical storage devices according to the first embodiment include a laminated configuration in which the first layer 11 on the exterior material side is a water absorbing layer and the second layer 12 on the electrical storage device element side is a layer free of a water absorbent in, for example, Fig. 2. In addition, examples of the laminated configuration of the resin film 1 for electrical storage devices include a laminated configuration in which the first layer 11 located in the middle is a water absorbing layer and the second layer 12 on the electrical storage device element side and the third layer 13 on the exterior material side are layers free of a water absorbent; and a laminated configuration in which at least one of the first layer 11 and the third layer 13 is a water absorbing layer and the second layer 12 is a layer free of a water absorbent, in, for example, Fig. 3.

In the second embodiment, when the resin film 1 for electrical storage devices has two or more layers, it is only necessary that at least one of the two or more layers contain a sulfur-based gas absorbent. Specific examples of the laminated configuration of the resin film 1 for electrical storage devices according to the second embodiment include a laminated configuration in which the first layer 11 on the exterior material side is a sulfur-based gas absorbing layer and the second layer 12 on the electrical storage device element side is a layer free of a sulfur-based gas absorbent; and a laminated configuration in which the first layer 11 on the exterior material side is a layer free of a sulfur-based gas absorbing layer and the second layer 12 on the electrical storage device element side is a layer containing a sulfur-based gas absorbent, in, for example, Fig. 2. In addition, examples of the laminated configuration of the resin film 1 for electrical storage devices include a laminated configuration in which the first layer 11 located in the middle is a sulfur-based gas absorbing layer and the second layer 12 on the electrical storage device element side and the third layer 13 on the exterior material side are layers free of a sulfur-based gas absorbent; a laminated configuration in which at least one of the first layer 11 and the third layer 13 is a sulfur-based gas absorbing layer and the second layer 12 is a layer free of a sulfur-based gas absorbent; a laminated configuration in which the first layer 11 located in the middle is a layer free of a sulfur-based gas absorbing layer and the second layer 12 on the electrical storage device element side and the third layer 13 on the exterior material side are layers containing a sulfur-based gas absorbent; and a laminated configuration in which at least one of the first layer 11 and the third layer 13 is a layer free of a sulfur-based gas absorbing layer and the second layer 12 is a layer containing a sulfur-based gas absorbent, in, for example, Fig. 3. Since hydrogen sulfide gas is generated from the electrical storage device element 4, the second layer 12 located on the electrical storage device element 4 side is preferably a sulfur-based gas absorbing layer.

In the first embodiment, it is preferable that one surface or both surfaces of the resin film 1 for electrical storage devices have a heat-sealing property. When the resin film 1 for electrical storage devices according to the first embodiment is located at the flange portion of the exterior material 3 (the peripheral edge portion 3a of the exterior material 3), it is preferable to enhance the heat-sealing property of the resin film 1 for electrical storage devices. For this reason, for example, when the resin film 1 for electrical storage devices has three or more layers, it is preferable that the layer located at the surface (the second layer 12 and the third layer 13 in Fig. 3) contains a heat-sealable resin. From the viewpoint of suppressing deterioration of the heat-sealing property of the layer located at the surface, the layer located at the surface is preferably free of a water absorbent (in particular, an inorganic water absorbent). In the electrical storage device, it is preferable that the water absorbing layer is provided between layers located at the surface from the viewpoint of further suitably exhibiting the water absorbing performance of the water absorbing layer of the resin film 1 for electrical storage devices. This is because if the water absorbing layer is located at the surface, moisture in the atmosphere is absorbed before the electrical storage device is manufactured, so that the water absorption performance of the water absorbing layer is likely to be deteriorated. In the electrical storage device, it is also preferable that for the water absorbing layer, the third layer 13 located on the exterior material 3 side is a water absorbing layer. This is because the third layer 13 is close to the exterior material 3, so that moisture entering from the exterior material 3 side is easily adsorbed. In the electrical storage device, it is also preferable that for the water absorbing layer, the second layer 12 located on the electrical storage device element 4 side is a water absorbing layer. This is because the second layer 12 is close to the electrical storage device elements 4, so that moisture contained in the electrical storage device element 4 is easily adsorbed.

In the second embodiment, it is preferable that one surface or both surfaces of the resin film 1 for electrical storage devices have a heat-sealing property. When the resin film 1 for electrical storage devices according to the second embodiment is located at the flange portion of the exterior material 3 (the peripheral edge portion 3a of the exterior material 3), it is preferable to enhance the heat-sealing property of the resin film 1 for electrical storage devices. For this reason, for example, when the resin film 1 for electrical storage devices has three or more layers, it is preferable that the layer located at the surface (the second layer 12 and the third layer 13 in Fig. 3) contains a heat-sealable resin. From the viewpoint of suppressing deterioration of the heat-sealing property of the layer located at the surface, the layer located at the surface is preferably free of a sulfur-based gas absorbent.

The resin film 1 for electrical storage devices according to the first embodiment may contain a sulfur-based gas absorbent described later, in addition to a water absorbent. In the present disclosure, a layer containing a sulfur-based gas absorbent is sometimes referred to as a "sulfur-based gas absorbing layer". When a sulfur-based gas absorbent is contained, the sulfur-based gas absorbent may be contained in the water absorbing layer, or may be contained in a layer free of a water absorbent. When the resin film 1 for electrical storage devices has two or more layers, it is preferable that the sulfur-based gas absorbent is contained in a layer free of a water absorbent and forms a sulfur-based gas absorbing layer. If a single layer contains a plurality of kinds of particles, there may be a problem that particles are hardly dispersed during formation of the resin film 1 for electrical storage devices, so that the film is perforated, or the strength of the resin film 1 for electrical storage devices varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the resin film 1 for electrical storage devices according to the first embodiment has two or more layers, specific examples of the laminated configuration of the resin film 1 for electrical storage devices include a laminated configuration in which the first layer 11 is a water absorbing layer and the second layer 12 is a sulfur-based gas absorbing layer in, for example, Fig. 2. In addition, examples of the laminated configuration of the resin film 1 for electrical storage devices include a laminated configuration in which the first layer 11 is a water absorbing layer and at least one of the second layer 12 and the third layer 13 is a sulfur-based gas absorbing layer; and a laminated configuration in which at least one of the first layer 11 and the third layer 13 is a water absorbing layer and the second layer 12 is a sulfur-based gas absorbing layer, in, for example, Fig. 3. Since hydrogen sulfide gas is generated from the electrical storage device element 4, the second layer 12 located on the electrical storage device element 4 side is preferably a sulfur-based gas absorbing layer. Among them, the laminated configuration in which the first layer 11 located between the second layer 12 and the third layer 13 is a water absorbing layer and the second layer 12 located on the electrical storage device element 4 side is a sulfur-based gas absorbing layer is most preferable because as described above, it is preferable that the water absorbing layer is provided between layers located at the surface.

The resin film 1 for electrical storage devices according to the second embodiment may contain a water absorbent described later, in addition to a sulfur-based gas absorbent. In the present disclosure, a layer containing a water absorbent is sometimes referred to as a "water absorbing layer" as described above. When a water absorbent is contained, the water absorbent may be contained in the sulfur-based gas absorbing layer, or may be contained in a layer free of a water absorbent. When the resin film 1 for electrical storage devices according to the second embodiment has two or more layers, it is preferable that the water absorbent is contained in a layer free of a sulfur-based gas absorbent and forms a water absorbing layer. If a single layer contains a plurality of kinds of particles, there may be a problem that particles are hardly dispersed during formation of the resin film 1 for electrical storage devices, so that the film is perforated, or the strength of the resin film 1 for electrical storage devices varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the resin film 1 for electrical storage devices according to the second embodiment has two or more layers, specific examples of the laminated configuration of the resin film 1 for electrical storage devices include a laminated configuration in which the first layer 11 is a sulfur-based gas absorbing layer and the second layer 12 is a water absorbing layer in, for example, Fig. 2. In addition, examples of the laminated configuration of the resin film 1 for electrical storage devices include a laminated configuration in which the first layer 11 is a sulfur-based gas absorbing layer and at least one of the second layer 12 and the third layer 13 is a water absorbing layer; and a laminated configuration in which at least one of the first layer 11 and the third layer 13 is a sulfur-based gas absorbing layer and the second layer 12 is a water absorbing layer, in, for example, Fig. 3. In the electrical storage device, it is preferable that the water absorbing layer is provided between layers located at the surface from the viewpoint of further suitably exhibiting the water absorbing performance of the water absorbing layer of the resin film 1 for electrical storage devices. This is because if the water absorbing layer is located at the surface, moisture in the atmosphere is absorbed before the electrical storage device is manufactured, so that the water absorption performance of the water absorbing layer is likely to be deteriorated. The laminated configuration in which the first layer 11 located between the second layer 12 and the third layer 13 is a water absorbing layer described later and the second layer 12 located on the electrical storage device element 4 side is a sulfur-based gas absorbing layer is most preferable. In the electrical storage device, it is also preferable that for the water absorbing layer, the third layer 13 located on the exterior material 3 side is a water absorbing layer. This is because the third layer 13 is close to the exterior material 3, so that moisture entering from the exterior material 3 side is easily adsorbed. In the electrical storage device, it is also preferable that for the water absorbing layer, the second layer 12 located on the electrical storage device element 4 side is a water absorbing layer. This is because the second layer 12 is close to the electrical storage device elements 4, so that moisture contained in the electrical storage device element 4 is easily adsorbed.

In the present disclosure, the resin contained in the resin film 1 for electrical storage devices is not particularly limited as long as the effect of the present disclosure is not impaired, and for example, a thermoplastic resin is preferable, and a heat-sealable resin is more preferable. Specific examples of the resin include resins such as polyester, polyolefin, polyamide, epoxy resin, acrylic resin, fluororesin, polyurethane, silicone resin and phenol resin, and modified products of these resins. The resin for forming the resin film 1 for electrical storage devices may be a copolymer of these resins or a modified product of the copolymer. Further, a mixture of these resins may be used. Among them, heat-sealable resins such as polyester and polyolefin are preferable.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of enhancing heat resistance and pressure resistance (for example, deterioration of insulation quality (due to collapse caused by heat-sealing) in sealing of the electrical storage device element 4 with the exterior material 3).

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefm copolymers; and terpolymers of ethylene-butene-propylene. The polyolefin resin in the case of a copolymer may be a block copolymer or a random copolymer. These polyolefin-based resins may be used alone, or may be used in combination of two or more thereof. Among them, polypropylene is particularly preferable because it is excellent in heat-sealing property.

The resin contained in the resin film 1 for electrical storage devices preferably contains a resin containing a polyolefin backbone as a main component, more preferably contains polyolefin as a main component, still more preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the resin film 1 for electrical storage devices. For example, the phrase "the resin contained in the resin film 1 for electrical storage devices contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the resin film 1 for electrical storage devices.

It is preferable that the resin contained in the resin film 1 for electrical storage devices preferably contains polyester as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the resin film 1 for electrical storage devices. For example, the phrase "the resin contained in the resin film 1 for electrical storage devices contains polyester as a main component" means that the content ratio of polyester is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the resin film 1 for electrical storage devices.

In manufacturing of the resin film 1 for electrical storage devices according to the present disclosure, a resin film formed in advance may be used as the resin film 1 for electrical storage devices. A resin for forming the resin film 1 for electrical storage devices may be formed into a film by extrusion molding, coating or the like to obtain a resin formed of the resin film.

In the present disclosure, the resin contained in the resin film 1 for electrical storage devices may contain an elastomer. The elastomer serves to enhance the flexibility of the resin film 1 for electrical storage devices while securing the durability of the resin film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the resin film 1 for electrical storage devices, the content of the elastomer is not particularly limited as long as the flexibility of the resin film 1 for electrical storage devices can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The content ratio of the resin contained in the resin film 1 for electrical storage devices according to the first embodiment is, for example, 99.9 mass% or more, preferably 99.5 mass% or more, and more preferably 99.0 mass% or more.

The content ratio of the resin contained in the resin film 1 for electrical storage devices according to the second embodiment is, for example, 50 mass% or more, preferably 55 mass% or more, and more preferably 60 mass% or more.

The water absorbent contained in the resin film 1 for electrical storage devices according to the first embodiment is not particularly limited as long as it exhibits a water absorbing property in a state of being dispersed in the resin film. For example, from the viewpoint of temporal stability in the electrical storage device, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-batteries, is preferably an inorganic chemical absorbent which re-releases moisture in a high-temperature range.

In the first embodiment, examples of the resin contained in the water absorbing layer include resins identical to those exemplified as resins contained in the resin film 1 for electrical storage devices.

In the first embodiment, the content ratio of the resin contained in the water absorbing layer of the resin film 1 for electrical storage devices is, for example, 50 mass% or more, preferably 55 mass% or more, and more preferably 60 mass% or more.

In the first embodiment, the content of the water absorbent contained in the resin film 1 for electrical storage devices is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the resin film 1 for electrical storage devices. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the resin film 1 for electrical storage devices is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the resin film 1 for electrical storage devices according to the first embodiment, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

As described above, the resin film 1 for electrical storage devices according to the first embodiment may contain a sulfur-based gas absorbent in addition to a water absorbent. It is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more and 15 µm or less. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

The hydrophobic zeolite is excellent in absorption of molecules having low polarity, such as a sulfur-based gas, and has a porous structure. In general, zeolite becomes more hydrophobic as the molar ratio of SiO₂ to Al₂O₃ increases, where SiO₂ and Al₂O₃ are constituent components of zeolite. More hydrophobic zeolite more easily absorbs molecules having low polarity, such as a sulfur-based gas, but has less affinity for molecules having high polarity, such as water, and hardly absorbs these molecules. The molar ratio of SiO₂ to Al₂O₃ of the hydrophobic zeolite is preferably 30/1 to 10,000/1, more preferably 35/1 to 9,000/1, still more preferably 40/1 to 8,500/1. Hydrophobic zeolite has high heat resistance, and thus can maintain an absorption effect even when exposed to a high temperature of 230°C or higher. In the present invention, hydrophobic zeolite having a molar ratio in the above-described range is preferably used from the viewpoint of the balance between the sulfur-based gas absorption capacity and availability.

Bentonite is an inorganic substance that contains montmorillonite, which is a clay mineral, as a main component, a large amount of layered aluminum phyllosilicate, and minerals such as quartz and feldspar as impurities. Examples of the bentonite include Na-type bentonite containing a large amount of Na⁺ ions, Ca-type bentonite containing a large amount of Ca²⁺ ions, and activated bentonite with Ca-type bentonite artificially converted into the Na-type by adding thereto several percents by weight of sodium carbonate.

Sepiolite is a clay mineral containing a hydrous magnesium silicic acid salt as a main component, and has a general chemical composition of Mg₈Si₁₂O₃₀(OH₂)₄(OH)₄·6-8H₂O, and has a porous structure. The pH (3% suspension) is preferably 8.0 to 9.0, more preferably 8.9 to 9.3 from the viewpoint of availability.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

In the first embodiment, the content of the sulfur-based gas absorbent in the resin film 1 for electrical storage devices is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 27 parts by mass or less, still more preferably 25 parts by mass or less, based on 100 parts by mass of the resin contained in the resin film 1 for electrical storage devices. The content is preferably in the range of 0.1 to 30 parts by mass, about 0.1 to 27 parts by mass, about 0.1 to 25 parts by mass, about 0.2 to 30 parts by mass, about 0.2 to 27 parts by mass, about 0.2 to 25 parts by mass, about 0.3 to 30 parts by mass, about 0.3 to 27 parts by mass, or about 0.3 to 25 parts by mass. The content of the sulfur-based gas absorbent contained in the sulfur-based gas absorbing layer of the resin film 1 for electrical storage devices is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less or 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the first embodiment, the content ratio of the resin contained in the sulfur-based gas absorbing layer is, for example, 50 mass% or more, preferably 55 mass% or more, and more preferably 60 mass% or more.

In the first embodiment, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the first embodiment, examples of the resin contained in the sulfur-based gas absorbing layer include resins identical to those exemplified as resins contained in the water absorbing layer.

When a sulfur-based gas absorbent is contained in the resin film 1 for electrical storage devices according to the first embodiment, the sulfur-based gas absorbent may be contained in the water absorbing layer or may be contained in a layer free of a water absorbent as described above. When the sulfur-based gas absorbent is contained in the water absorbing layer, the water absorbing layer also functions as a sulfur-based gas absorbing layer.

The resin film 1 for electrical storage devices according to the first embodiment may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

The thickness of the resin film 1 for electrical storage devices according to the first embodiment is not particularly limited as long as the effect of the present disclosure is exhibited, and the thickness of the resin film 1 for electrical storage devices is preferably about 10 µm or more, more preferably about 15 µm or more, still more preferably about 20 µm or more, and preferably about 1,000 µm or less, more preferably about 900 µm or less, still more preferably about 500 µm or less. The thickness is preferably in the range of about 10 to 1000 µm, about 10 to 900 µm, about 10 to 500 µm, about 15 to 1000 µm, about 15 to 900 µm, about 15 to 500 µm, about 20 to 1000 µm, about 20 to 900 µm, and about 20 to 500 µm.

In the first embodiment, when the resin film 1 for electrical storage devices has two or more layers, each layer may have a thickness such that the resin film 1 for electrical storage devices has the above-described thickness. For example, the thickness of the water absorbing layer is preferably about 5 µm or more, more preferably about 6 µm or more, still more preferably about 7 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 6 to 500 µm, about 6 to 400 µm, about 6 to 300 µm, about 7 to 500 µm, about 7 to 400 µm, or about 7 to 300 µm. The thickness of the sulfur-based gas absorbing layer is preferably about 5 µm or more, more preferably about 7 µm or more, still more preferably about 10 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 7 to 500 µm, about 7 to 400 µm, about 7 to 300 µm, about 10 to 500 µm, about 10 to 400 µm, or about 10 to 300 µm.

In the second embodiment, it is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more, 1.0 µm or more or the like, and preferably 15 µm or less, 10 µm or less, 8 µm or less or the like. The number average particle size of the powder is preferably in the range of about 0.1 to 15 µm, about 0.1 to 10 µm, about 0.1 to 8 µm, about 1 to 15 µm, about 1 to 10 µm, or about 1 to 8 µm. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

Specific examples of the hydrophobic zeolite, bentonite and sepiolite are as described in the first embodiment, and the description thereof is omitted.

### (Chemical sulfur-based gas absorbent)

The chemical sulfur-based gas absorbent is as described in the first embodiment, and description thereof is omitted.

Examples of the resin contained in the sulfur-based gas absorbing layer include resins identical to those exemplified as resins contained in the resin film 1 for electrical storage devices.

In the second embodiment, the content of the sulfur-based gas absorbent in the resin film 1 for electrical storage devices is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 29 parts by mass or less, still more preferably 28 parts by mass or less, based on 100 parts by mass of the resin contained in the resin film 1 for electrical storage devices. The content is preferably in the range of 0.1 to 30 parts by mass, about 0.1 to 29 parts by mass, about 0.1 to 28 parts by mass, about 0.2 to 30 parts by mass, about 0.2 to 29 parts by mass, about 0.2 to 28 parts by mass, about 0.3 to 30 parts by mass, about 0.3 to 29 parts by mass, or about 0.3 to 28 parts by mass. The content of the sulfur-based gas absorbent contained in the sulfur-based gas absorbing layer of the resin film 1 for electrical storage devices is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the second embodiment, the content ratio of the resin contained in the sulfur-based gas absorbing layer is, for example, 40 mass% or more, preferably 45 mass% or more, and more preferably 50 mass% or more.

In the second embodiment, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the second embodiment, the resin film 1 for electrical storage devices may contain a water absorbent in addition to a sulfur-based gas absorbent as described above. The water absorbent contained in the resin film 1 for electrical storage devices is not particularly limited as long as it exhibits a water absorbing property in a state of being dispersed in the resin film. For example, from the viewpoint of temporal stability in the electrical storage device, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-batteries, is preferably an inorganic chemical absorbent which re-releases moisture in a high-temperature range.

In the second embodiment, the content of the water absorbent contained in the resin film 1 for electrical storage devices is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the resin film 1 for electrical storage devices. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the resin film 1 for electrical storage devices is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the resin film 1 for electrical storage devices according to the second embodiment, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

In the second embodiment, examples of the resin contained in the water absorbing layer include resins identical to those exemplified as resins contained in the resin film 1 for electrical storage devices.

In the second embodiment, the content ratio of the resin contained in the water absorbing layer of the resin film 1 for electrical storage devices is, for example, 50 mass% or more, preferably 55 mass% or more, and more preferably 60 mass% or more.

When a water absorbent is contained in the resin film 1 for electrical storage devices according to the second embodiment, the water absorbent may be contained in the sulfur-based gas absorbing layer or may be contained in a layer free of a sulfur-based gas absorbent as described above. When the water absorbent is contained in the sulfur-based gas absorbing layer, the sulfur-based gas absorbing layer also functions as a water absorbing layer.

In the second embodiment, the resin film 1 for electrical storage devices may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

In the second embodiment, the thickness of the resin film 1 for electrical storage devices according to the first embodiment is not particularly limited as long as the effect of the present disclosure is exhibited, and the thickness of the resin film 1 for electrical storage devices is preferably about 25 µm or more, more preferably about 30 µm or more, still more preferably about 40 µm or more, and preferably about 250 µm or less, more preferably about 240 µm or less, still more preferably about 230 µm or less. The thickness is preferably in the range of about 25 to 250 µm, about 25 to 240 µm, about 25 to 230 µm, about 30 to 250 µm, about 30 to 240 µm, about 30 to 230 µm, about 40 to 250 µm, about 40 to 240 µm, or about 40 to 230 µm.

In the second embodiment, when the resin film 1 for electrical storage devices has two or more layers, each layer may have a thickness such that the resin film 1 for electrical storage devices has the above-described thickness. For example, the thickness of the sulfur-based gas absorbing layer is preferably about 10 µm or more, more preferably about 15 µm or more, still more preferably about 20 µm or more, and for example, about 100 µm or less, preferably about 95 µm or less, more preferably about 90 µm or less, still more preferably about 85 µm or less. The thickness is preferably in the range of about 10 to 100 µm, about 10 to 95 µm, about 10 to 90 µm, about 10 to 85 µm, about 15 to 100 µm, about 15 to 95 µm, about 15 to 90 µm, about 15 to 85 µm, about 20 to 100 µm, about 20 to 95 µm, about 20 to 90 µm, or about 20 to 85 µm. The thickness of the water absorbing layer is preferably about 5 µm or more, more preferably about 6 µm or more, still more preferably about 7 µm or more, and preferably about 60 µm or less, more preferably about 55 µm or less, still more preferably about 50 µm or less. The thickness is preferably in the range of about 5 to 60 µm, about 5 to 55 µm, about 5 to 50 µm, about 6 to 60 µm, about 6 to 55 µm, about 6 to 50 µm, about 7 to 60 µm, about 7 to 55 µm, or about 7 to 50 µm.

### (Method for manufacturing resin film for electrical storage devices)

In the present disclosure, the method for manufacturing the resin film 1 for electrical storage devices is not particularly limited as long as the resin film 1 for electrical storage devices is obtained, and a known or conventional film formation method and lamination method may be applied. The resin film 1 for electrical storage devices can be manufactured by, for example, a known film formation method and/or lamination method such as an extrusion method, a coextrusion method, a cast molding method, a T-die method, a cutting method or an inflation method. When the resin film 1 for electrical storage devices has two or more layers, for example, films for forming the layers, which are produced in advance, may be laminated with an adhesive agent layer interposed therebetween, a molten resin composition may be laminated by extrusion or co-extrusion on a layer formed in advance, a plurality of layers may be laminated by melting and press-bonding while being produced in parallel, or one or more resins may be applied onto another layer, and dried to perform coating.

In the first embodiment, a layer forming the resin film 1 for electrical storage devices, such as a water absorbing layer (sulfur-based gas absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a water absorbing layer or the like is laminated by an extrusion coating method in the first embodiment, first, a resin composition for forming the layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

In the first embodiment, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the second embodiment, a layer forming the resin film 1 for electrical storage devices, such as a sulfur-based gas absorbing layer (water absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a sulfur-based gas absorbing layer (or a water absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a sulfur-based gas absorbing layer or the like is laminated by an extrusion coating method in the second embodiment, first, a resin composition for forming the layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

In the second embodiment, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the present disclosure, desired surface treatment can be applied to the surface of each layer between the layers forming the resin film for electrical storage devices in advance if necessary for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

In the present disclosure, each layer forming the resin film for electrical storage devices can be further uniaxially stretched or biaxially stretched by a heretofore known method using a tenter method, a tubular method or the like if necessary.

### 2. Electrical storage device

As described above, the electrical storage device 10 of the present disclosure has a structure in which the electrical storage device element 4 is sealed with the exterior material 3. The electrical storage device 10 is sealed by covering the electrical storage device element 4 with the exterior material 3 in such a manner as to allow formation of a flange portion of the exterior material 3 (a peripheral edge portion 3a of the exterior material 3) on the peripheral edge of the electrical storage device element 4, and heat-sealing the flange portion of the exterior material 3 to perform tight sealing. In the electrical storage device 10 of the present disclosure, the resin film 1 for electrical storage devices may be located on the whole of a surface of the exterior material 3 on the electrical storage device element 4 side (heat-sealable resin layer 35 side), or may be located on a part of the surface on the electrical storage device element 4 side (heat-sealable resin layer 35 side). From the viewpoint of suitably exhibiting the effect of the present disclosure, it is preferable that the resin film 1 for electrical storage devices is disposed between the exterior material 3 of the electrical storage device 10 and the electrical storage device element 4 in such a manner as to be located on the whole of a surface of the exterior material 3 on the electrical storage device element 4 side (heat-sealable resin layer 35 side) (see Figs. 5 to 9). For example, the resin film 1 for electrical storage devices may be disposed only between the exterior material 3 for electrical storage devices and the electrical storage device element 4 as shown in Fig. 5, or may be disposed between the exterior material peripheral edge portion 3a (heat-sealed portion) of the exterior material 3 and the electrical storage device element 4 as shown in Fig. 6, or the electrical storage device element 4 may be covered with the resin film 1 for electrical storage devices as shown in Fig. 7, and a part of a surface of the metal terminal 2 may be further covered with the resin film 1 for electrical storage devices as shown in Fig. 8. Further, as shown in Fig. 9, it is also possible to dispose the resin film 1 for electrical storage devices according to the present disclosure between the exterior material 3 of the electrical storage device 10 and the electrical storage device element 4 such that the electrical storage device element 4 is sealed by the resin film 1 for electrical storage devices. The resin film 1 for electrical storage devices may be present between the exterior material 3 and the metal terminal 2 in a state of being hear-sealed.

### [Exterior material 3]

Examples of the exterior material 3 include materials having a laminated structure with a laminate including at least a base material layer 31, a barrier layer 33 and a heat-sealable resin layer 35 in this order. Fig. 4 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3. In the exterior material 3, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-welded to seal the electrical storage device element 4, so that the electrical storage device element 4 is sealed. Figs. 5 to 9 show the electrical storage device 10 where the embossed-type exterior material 3, which is molded by embossing molding, is used, but the exterior material 3 may be of non-molded pouch type. Examples of the pouch type include three-way seal, four-way seal and pillow type, and any of the types may be used. Alternatively, a circumferential winding type may be employed in which the exterior material 3 is wound around the circumference of the electrical storage device element 4 as shown in Figs. 10 and 11.

The thickness of the laminate forming the exterior material 3 is not particularly limited, and is, for example, about 190 µm or more, preferably about 180 µm or less, about 160 µm or less, about 155 µm or less, about 140 µm or less, about 130 µm or less, or about 120 µm or less from the viewpoint of cost reduction, improvement of the energy density and the like, and preferably about 35 µm or more, about 45 µm or more, about 60 µm or more, or about 80 µm or more from the viewpoint of maintaining the function of the exterior material 3, i.e., a function of protecting the electrical storage device element 4. For example, the thickness is preferably in the range of about 35 to 190 µm, about 35 to 180 µm, about 35 to 160 µm, about 35 to 155 µm, about 35 to 140 µm, about 35 to 130 µm, about 35 to 120 µm, about 45 to 190 µm, about 45 to 180 µm, about 45 to 160 µm, about 45 to 155 µm, about 45 to 140 µm, about 45 to 130 µm or more, about 45 to 120 µm, about 60 to 190 µm, about 60 to 180 µm, about 60 to 160 µm, about 60 to 155 µm, about 60 to 140 µm, about 60 to 130 µm, about 60 to 120 µm, about 80 to 190 µm, about 80 to 180 µm, about 80 to 160 µm, about 80 to 155 µm, about 80 to 140 µm, about 80 to 130 µm or about 80 to 120 µm.

The resin film 1 for electrical storage devices according to the present disclosure can be suitably applied to an exterior material for all-solid-state batteries, and the thickness of the laminate forming the exterior material for all-solid-state batteries is not particularly limited, and is preferably about 10,000 µm or less, about 8,000 µm or less, or about 5,000 µm or less from the viewpoint of cost reduction, improvement of the energy density and the like, and preferably about 100 µm or more, about 150 µm or more, or about 200 µm or more from the viewpoint of maintaining the function of the exterior material for all-solid-state batteries, i.e., a function of protecting a battery element. The thickness of the laminate is preferably, in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, or about 200 to 5,000 µm, and particularly preferably about 200 to 5,000 µm.

### (Base material layer 31)

In the exterior material 3, the base material layer 31 is a layer that functions as a base material of the exterior material, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hard to occur, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31. Since the all-solid-state battery has tolerance to a temperature of 150°C or higher, sealing is often performed at a high temperature of 200°C or higher, and biaxially stretched polyester is most suitable.

The base material layer 31 can also be laminated with a resin film which is made of a different material for improving pinhole resistance, and insulation quality as a packaging of an electrical storage device. Specific examples include a multilayer structure in which a polyester film and a nylon film are laminated, and a multilayer structure in which a biaxially stretched polyester and a biaxially stretched nylon are laminated. When the base material layer 31 is made to have a multilayer structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method. For sealing at a high temperature, it is desirable that at least the outermost layer be a biaxially stretched polyester.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 µm, preferably about 3 to 25 µm.

### (Barrier Layer 33)

In the exterior material, the barrier layer 33 is a layer which is intended to improve the strength of the exterior material and which has a function of preventing ingress of water vapor, oxygen, light and the like into the electrical storage device. The barrier layer 33 is preferably a metal layer, i.e. a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material, it is more preferred to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, from the viewpoint of making pinholes less likely to be generated by molding while thinning the exterior material.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include adhesives formed of a polyester polyol compound and an alicyclic isocyanate compound.

The thickness of the adhesive layer 34 is, for example, about 1 to 40 µm, preferably about 2 to 30 µm.

### (Heat-sealable resin layer 35)

In the exterior material 3, the heat-sealable resin layer 35 is a layer which corresponds to an innermost layer and performs a function of hermetically sealing the electrical storage device element by heat-welding the heat-sealable resin layers to each other during construction of the electrical storage device.

The resin component to be used in the heat-sealable resin layer 35 is not particularly limited as long as it can be heat-welded, and for the exterior material, examples thereof generally include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may be formed of only one layer, but may be formed of two or more layers with the same resin component or different resin components.

The thickness of the heat-sealable resin layer 35 is not particularly limited, and is, for example, about 2 to 2000 µm, preferably about 5 to 1000 µm, still more preferably about 10 to 500 µm.

The resin film 1 for electrical storage devices according to the present disclosure can be suitably applied to an exterior material for all-solid-state batteries, and the melting point of the heat-sealable resin layer 35 of the exterior material for all-solid-state batteries is preferably 150 to 250°C, more preferably 180 to 270°C, still more preferably 200 to 270°C, still more preferably 200 to 250°C.

Examples of the resin contained in the heat-sealable resin layer 35 of the exterior material for all-solid-state batteries include polyolefins such as polypropylene and polyethylene, acid-modified polyolefins such as acid-modified polypropylene and acid-modified polyethylene, and polybutylene terephthalate. Among them, polybutylene terephthalate is excellent in heat resistance, and therefore it is preferable that in the exterior material for all-solid-state batteries, the heat-sealable resin layer 35 is formed of a polybutylene terephthalate film. When the heat-sealable resin layer 35 is formed from a polybutylene terephthalate film, the heat-sealable resin layer 35 is also excellent in adhesion to the resin film 1 for electrical storage devices according to the present disclosure. The polybutylene terephthalate film that forms the heat-sealable resin layer 35 may be formed into the heat-sealable resin layer 35 by laminating a polybutylene terephthalate film prepared in advance with the adhesive layer 34, or may be formed into a film by melt-extruding a resin for forming the polybutylene terephthalate film and laminated with the adhesive layer 34, or a resin for forming the heat-sealable resin layer 35 and a resin for forming the adhesive layer 34 may be coextruded to perform lamination.

The polybutylene terephthalate film may be a stretched polybutylene terephthalate film or an unstretched polybutylene terephthalate film, and is preferably an unstretched polybutylene terephthalate film.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 35 may be composed of only one layer, or may be composed of two or more layers with the same resin component or different resin components. When the heat-sealable resin layer 35 is composed of two or more layers, at least one layer is preferably formed of a polybutylene terephthalate film, and the polybutylene terephthalate film is preferably an innermost layer of the exterior material for all-solid-state batteries. The layer bonded to the adhesive layer 34 is preferably a polybutylene terephthalate film. When the heat-sealable resin layer 35 is formed from two or more layers, the layer which is not formed of a polybutylene terephthalate film may be, for example, a layer formed of a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to polybutylene terephthalate, it is preferable that the heat-sealable resin layer 35 includes only a polybutylene terephthalate film.

The electrical storage device of the present disclosure is an electrical storage device such as a battery (including a condenser, a capacitor and the like). The electrical storage device of the present disclosure may be either a primary battery or a secondary battery, and is preferably used for a secondary battery. The type of secondary battery is not particularly limited, and examples thereof include lithium ion batteries, lithium ion polymer batteries, all-solid-state batteries, semi-solid-state batteries, pseudo-solid-state batteries, polymer batteries, all polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, lithium ion batteries, lithium ion polymer batteries and all-solid-state batteries are used as the electrical storage device of the present disclosure, and the electrical storage device is particularly suitably used for all-solid-state batteries.

### EXAMPLES

The present disclosure will be described in detail below by giving examples and comparative examples related to the first embodiment of the present disclosure. However, the present disclosure is not limited to examples.

### <Water absorbent and sulfur-based gas absorbent>

Water absorbents and sulfur-based gas absorbents used in examples are as follows.

### [Water absorbent]

- Calcium oxide: HAL-J, calcium oxide manufactured by Yoshikawa Lime Industry Co., Ltd. average particle size: 1 to 2 µm.
- Magnesium oxide: STARMAG PSF-150, magnesium oxide manufactured by Konoshima Chemical Co., Ltd. average particle size: 0.6 µm.
- Zeolite: MIZUKASIEVES 5AP, zeolite manufactured by Mizusawa Industrial Chemicals, Ltd. molar ratio of SiO to Al₂O₃: 2/1, average particle size: 5 µm.
- Aluminum oxide: A33F (SA30 series), aluminum oxide manufactured by Nippon Light Metal Company, Ltd. average particle size: 2 µm.

### [Chemical sulfur-based gas absorbent]

- Copper oxide/zinc oxide combined aluminosilicate: Dushlite CZU, metal oxide-carrying inorganic porous material manufactured by Sinanen Zeomic Co., Ltd. average particle size: 3 to 5 µm.

### <Manufacturing of PBT masterbatch>

Each PBT masterbatch was prepared by uniformly mixing heated and melted polybutylene terephthalate (PBT) and each water absorbent so as to meet the composition (mass ratio) shown in Table 1. Four types of PBT masterbatches, i.e., "PBT MB1", "PBT MB2", "PBT MB3" and "PBT MB4" were obtained. The masterbatches each have a pellet shape.

**[Table 1A]**

| Table 1A | | PBT masterbatch | | | |
|---|---|---|---|---|---|
| | | PBT MB 1 | PBT MB2 | PBT MB3 | PBT MB4 |
| PBT (parts by mass) | | 40 | 40 | 40 | 40 |
| Water absorbent (parts by mass) | Calcium oxide | 60 | - | - | - |
| | Magnesium oxide | - | 60 | - | - |
| | Zeolite | - | - | 60 | - |
| | Aluminum oxide | - | - | - | 60 |

### <Manufacturing of resin film for electrical storage devices)

### (Examples 1A to 11A and Comparative Example 1A)

Resin films for electrical storage devices (each having a total thickness of 40 µm), whose laminated configurations are shown in Table 2A, were manufactured by extrusion molding. In the resin film for electrical storage devices, a layer containing a water absorbent was a water absorbing layer. The water absorbing layer was formed by heating and melting and uniformly mixing each of the obtained PBT masterbatches (pellets) and polybutylene terephthalate (PBT) so as to meet the formulation (mass ratio) shown in Table 2A, and extrusion-molding the mixture. Layers other than the water absorbing layer is a layer formed of polybutylene terephthalate (PBT). Those layers were formed by extrusion molding together with the water absorbing layer (co-extrusion molding). In the laminated configuration of the resin film for electrical storage devices, the first layer is disposed on the exterior material side, the third layer is a layer disposed on the electrical storage device element side, and the second layer is a layer located between the first layer and the third layer. Examples 1A to 4A and 7A to 11A have a three-layered configuration in which a first layer, a second layer and a third layer are laminated in this order. In Examples 1A to 4A, 7A, 10A and 11A, the second layer was a water absorbing layer. In Example 8A, the third layer was a water absorbing layer. In Example 9A, the first layer was a water absorbing layer. Example 5A had a two-layered configuration in which a second layer and a third layer are laminated, with the second layer being a water absorbing layer. Example 6A had a single-layered configuration with a second layer, with the second layer being a water absorbing layer.

In Example 10A, the third layer was a sulfur-based gas absorbing layer, and in Example 11A, the first layer was a sulfur-based gas absorbing layer, and a sulfur-based gas absorbing property was imparted to the first layer. Each of the sulfur-based gas absorbing layers was formed by uniformly mixing 60 parts by mass of heated and melted PBT and 40 parts by mass of copper oxide/zinc oxide combined aluminosilicate as a chemical sulfur-based gas absorbent to prepare each PBT masterbatch, heating and melting and uniformly mixing the obtained PBT masterbatch (pellet) and polybutylene terephthalate (PBT), and extrusion-molding the mixture. The content of the sulfur-based gas absorbent in the sulfur-based gas absorbing layer was set to 5 mass%.

**[Table 2A]**

| Table 2A | | | | Example | | | | | | | | | | | Comparative Example |
|---|---|---|---|---|---|---|---|---|---|---|---|---|---|---|---|
| | | | | 1A | 2A | 3A | 4A | 5A | 6A | 7A | 8A | 9A | 10A | 11A | 1A |
| Water absorbing layer | Formulation (mass ratio) | Masterbatch | PBT MB1 | 50.0 | - | - | - | 50.0 | 83.3 | 5.0 | 50.0 | 50.0 | 50.0 | 50.0 | - |
| | | | PBT MB2 | - | 50.0 | - | - | - | - | - | - | - | - | - | - |
| | | | PBT MB3 | - | - | 50.0 | - | - | - | - | - | - | - | - | - |
| | | | PBT MB4 | - | - | - | 50.0 | - | - | - | - | - | - | - | - |
| | | Resin | PBT | 50.0 | 50.0 | 50.0 | 50.0 | 50.0 | 16.7 | 95.0 | 50.0 | 50.0 | 50.0 | 50.0 | - |
| | | Total | | 100.0 | 100.0 | 100.0 | 100.0 | 100.0 | 100.0 | 100.0 | 100.0 | 100.0 | 100.0 | 100.0 | - |
| | Raw material composition | Resin | PBT | 70.0 | 70.0 | 70.0 | 70.0 | 70.0 | 50.0 | 97.0 | 70.0 | 70.0 | 70.0 | 70.0 | - |
| | | Water absorbent | Calcium oxide | 30.0 | - | - | - | 30.0 | 50.0 | 3.0 | 30.0 | 30.0 | 30.0 | 30.0 | - |
| | | | Magnesium oxide | - | 30.0 | - | - | - | - | - | - | - | - | - | - |
| | | | Zeolite | - | - | 30.0 | - | - | - | - | - | - | - | - | - |
| | | | Aluminum oxide | - | - | - | 30.0 | - | - | - | - | - | - | - | - |
| Resin film for electrical storage devices | Laminated configuration*¹ | First layer | (µm) | 10 | 10 | 10 | 10 | - | - | 10 | 10 | 10 | 10 | 10*² | - |
| | | Second layer (intermediate layer) | (µm) | 20 | 20 | 20 | 20 | 20 | 40 | 20 | 20 | 20 | 20 | 20 | - |
| | | Third layer | (µm) | 10 | 10 | 10 | 10 | 20 | - | 10 | 10 | 10 | 10*² | 10 | 40 |
| | | Location of water absorbing layer | | Second layer | Second layer | Second layer | Second layer | Second layer | Second layer | Second layer | Third layer | First layer | Second layer | Second layer | - |
| | Evaluation | Film formability | | A | A | A | A | A | A | A | A | A | A | A | A |
| | | Water absorbing property | Relative humidity (%) | 3.0 | 7.0 | 13.0 | 15.0 | 3.0 | 0.0 | 50.0 | 3.0 | 4.0 | 3.0 | 3.0 | 70.0 |
| | | Sulfur-based gas absorbing property*³ | Hydrogen sulfide concentration (ppm) | - | - | - | - | - | - | - | - | - | 3.5 | 3.5 | - |
| | | | Dimethyl sulfide concentration (ppm) | - | - | - | - | - | - | - | - | - | 15.0 | 15.0 | - |

| | | | | | | | | | | | | | | | |
|---|---|---|---|---|---|---|---|---|---|---|---|---|---|---|---|
| *1 In the laminated configuration of the resin film for electrical storage devices, which is shown in Table 2A, the first layer is disposed on the exterior material side, and the third layer is a layer disposed on the electrical storage device element side. Examples 8A and 9A are the same resin film for electrical storage devices, but in Example 8A, the third layer disposed on the electrical storage device element side is used (and also evaluated as described above) as a water absorbing layer (a layer containing a water absorbent), and in Example 9A, the first layer disposed on the exterior material side is used (and also evaluated as described later) as a water absorbing layer (containing a water absorbent). *2 In Examples 10A and 11A, a sulfur-based gas absorbent is blended in a layer different from the water absorbing layer. In Example 10A, a sulfur-based gas absorbent is blended in the third layer, and in Example 11A, a sulfur-based gas absorbent is blended in the first layer. *3 The sulfur-based gas absorbability was evaluated only for Examples 10A and 11A. | | | | | | | | | | | | | | | |

### <Manufacturing of PP masterbatch>

Each PP masterbatch was prepared by uniformly mixing heated and melted polypropylene (PP) and each water absorbent so as to meet the composition (mass ratio) shown in Table 3A. Four types of PP masterbatches, i.e., "PP MB1", "PP MB2", "PP MB3" and "PP MB4" were obtained. The masterbatches each have a pellet shape.

**[Table 3A]**

| Table 3A | | PP masterbatch | | | |
|---|---|---|---|---|---|
| | | PPMB1 | PPMB2 | PPMB3 | PPMB4 |
| PP (parts by mass) | | 40 | 40 | 40 | 40 |
| Water absorbent (parts by mass) | Calcium oxide | 60 | - | - | - |
| | Magnesium oxide | - | 60 | - | - |
| | Zeolite | - | - | 60 | - |
| | Aluminum oxide | - | - | - | 60 |

### <Manufacturing of resin film for electrical storage devices)

### (Examples 12A to 22A and Comparative Example 2A)

Resin films for electrical storage devices (each having a total thickness of 40 µm), whose laminated configurations are shown in Table 4A, were manufactured by extrusion molding. In the resin film for electrical storage devices, a layer containing a water absorbent was a water absorbing layer. The water absorbing layer was formed by heating and melting and uniformly mixing each of the obtained PP masterbatches (pellets) and polypropylene (PP) so as to meet the formulation (mass ratio) shown in Table 4A, and extrusion-molding the mixture. Layers other than the water absorbing layer is a layer formed of polypropylene (PP). Those layers were formed by extrusion molding together with the water absorbing layer (co-extrusion molding). In the laminated configuration of the resin film for electrical storage devices, the first layer is disposed on the exterior material side, the third layer is a layer disposed on the electrical storage device element side, and the second layer is a layer located between the first layer and the third layer. Examples 12A to 15A and 18A to 22A have a three-layered configuration in which a first layer, a second layer and a third layer are laminated in this order. In Examples 12A to 15A, 18A, 21A and 22A, the second layer was a water absorbing layer. In Example 19A, the third layer was a water absorbing layer. In Example 20A, the first layer was a water absorbing layer. Example 16A had a two-layered configuration in which a second layer and a third layer are laminated, with the second layer being a water absorbing layer. Example 17A had a single-layered configuration with a second layer, with the second layer being a water absorbing layer.

In Example 21A, the third layer was a sulfur-based gas absorbing layer, and in Example 22A, the first layer was a sulfur-based gas absorbing layer, and a sulfur-based gas absorbing property was imparted to the first layer. Each of the sulfur-based gas absorbing layers was formed by uniformly mixing 60 parts by mass of heated and melted PP and 40 parts by mass of copper oxide/zinc oxide combined aluminosilicate as a chemical sulfur-based gas absorbent to prepare each PP masterbatch, heating and melting and uniformly mixing the obtained PP masterbatch (pellet) and polypropylene (PP), and extrusion-molding the mixture. The content of the sulfur-based gas absorbent in the sulfur-based gas absorbing layer was set to 5 mass%.

**[Table 4A]**

| Table 4A | | | | Example | | | | | | | | | | | Comparative Example |
|---|---|---|---|---|---|---|---|---|---|---|---|---|---|---|---|
| | | | | 12A | 13A | 14A | 15A | 16A | 17A | 18A | 19A | 20A | 21A | 22A | 2A |
| Water absorbing layer | Formulation (mass ratio) | Masterbatch | PP MB 1 | 50.0 | - | - | - | 50.0 | 83.3 | 5.0 | 50.0 | 50.0 | 50.0 | 50.0 | - |
| | | | PP MB2 | - | 50.0 | - | - | - | - | - | - | - | - | - | - |
| | | | PP MB3 | - | - | 50.0 | - | - | - | - | - | - | - | - | - |
| | | | PP MB4 | - | - | - | 50.0 | - | - | - | - | - | - | - | - |
| | | Resin | PP | 50.0 | 50.0 | 50.0 | 50.0 | 50.0 | 16.7 | 95.0 | 50.0 | 50.0 | 50.0 | 50.0 | - |
| | | Total | | 100.0 | 100.0 | 100.0 | 100.0 | 100.0 | 100.0 | 100.0 | 100.0 | 100.0 | 100.0 | 100.0 | - |
| | Raw material composition | Resin | PP | 70.0 | 70.0 | 70.0 | 70.0 | 70.0 | 50.0 | 97.0 | 70.0 | 70.0 | 70.0 | 70.0 | - |
| | | Water absorbent | Calcium oxide | 30.0 | - | - | - | 30.0 | 50.0 | 3.0 | 30.0 | 30.0 | 30.0 | 30.0 | - |
| | | | Magnesium oxide | - | 30.0 | - | - | - | - | - | - | - | - | - | - |
| | | | Zeolite | - | - | 30.0 | - | - | - | - | - | - | - | - | - |
| | | | Aluminum oxide | - | - | - | 30.0 | - | - | - | - | - | - | - | - |
| Resin film for electrical storage devices | Laminated configuration*¹ | First layer | (µm) | 10 | 10 | 10 | 10 | - | - | 10 | 10 | 10 | 10 | 10*² | - |
| | | Second layer (intermediate layer) | (µm) | 20 | 20 | 20 | 20 | 20 | 40 | 20 | 20 | 20 | 20 | 20 | - |
| | | Third layer | (µm) | 10 | 10 | 10 | 10 | 20 | - | 10 | 10 | 10 | 10*² | 10 | 40 |
| | | Location of water absorbing layer | | Second layer | Second layer | Second layer | Second layer | Second layer | Second layer | Second layer | Third layer | First layer | Second layer | Second layer | - |
| | Evaluation | Film formability | | A | A | A | A | A | A | A | A | A | A | A | A |
| | | Water absorbing property | Relative humidity (%) | 3.0 | 7.0 | 13.0 | 15.0 | 3.0 | 0.0 | 50.0 | 3.0 | 4.0 | 3.0 | 3.0 | 70.0 |
| | | Sulfur-based gas absorbing property*³ | Hydrogen sulfide concentration (ppm) | - | - | - | - | - | - | - | - | - | 3.5 | 3.5 | - |
| | | | Dimethyl sulfide concentration (ppm) | - | - | - | - | - | - | - | - | - | 15.0 | 15.0 | - |

| | | | | | | | | | | | | | | | |
|---|---|---|---|---|---|---|---|---|---|---|---|---|---|---|---|
| *1 In the laminated configuration of the resin film for electrical storage devices, which is shown in Table 4A, the first layer is disposed on the exterior material side, and the third layer is a layer disposed on the electrical storage device element side. Examples 19A and 20A are the same resin film for electrical storage devices, but in Example 19A, the third layer disposed on the electrical storage device element side is used (and also evaluated as described above) as a water absorbing layer (a layer containing a water absorbent), and in Example 20A, the first layer disposed on the exterior material side is used (and also evaluated as described later) as a water absorbing layer (containing a water absorbent). *2 In Examples 21A and 22A, a sulfur-based gas absorbent is blended in a layer different from the water absorbing layer. In Example 21A, a sulfur-based gas absorbent is blended in the third layer, and in Example 22A, a sulfur-based gas absorbent is blended in the first layer. *3 The sulfur-based gas absorbability was evaluated only for Examples 21A and 22A. | | | | | | | | | | | | | | | |

### <Evaluation>

### [Film formability]

The appearance of the resin film for electrical storage devices was visually observed, and whether or not there were defects was evaluated on the basis of the following evaluation criteria. The results are shown in Tables 2A and 4A.
A: There were no wrinkles, bumps and delamination in the laminate.
C: There were wrinkles, bumps and/or delamination in the laminate.

### [Relative humidity and sulfur-based gas concentration]

The resin film was cut into 20 × 20 cm, and 1,000 ml of a test gas adjusted to a relative humidity of 80% RH or more and 30 ppm of hydrogen sulfide and 50 ppm of dimethyl sulfide as sulfur-based gas components, and a humidity data logger (TR-72wf from T&D Corporation) were put in a gas sampling back (SMARTBAGPA series manufactured by GL Sciences Inc.), and left standing at 25°C for 2 days, i.e., 48 hours, followed by measurement of the relative humidity and the concentrations of hydrogen sulfide and dimethyl sulfide. The concentrations of hydrogen sulfide and dimethyl sulfide were measured with a detection tube.

### [Evaluation with exterior material]

### <Manufacturing of exterior material>

### (Exterior material (1) using PBT as heat-sealable resin layer)

As a base material layer, a polyethylene terephthalate film (25 µm) was provided in which a surface to be bonded had been corona-treated. In addition, an aluminum alloy foil (JIS H4160: 1994 A8021 H-O (thickness: 40 µm)) was provided as a barrier layer. As a heat-sealable resin layer, a polybutylene terephthalate film (thickness: 50 µm) was provided in which a surface to be bonded had been corona-treated. Using a two-liquid curable urethane adhesive (polyester polyol and alicyclic isocyanate compound), the base material layer and the barrier layer were bonded to each other by a dry lamination method to produce a laminate of a base material layer (25 µm), an adhesive agent layer (3 µm) and a barrier layer (40 µm). Next, using a two-liquid curable urethane adhesive (polyester polyol and alicyclic isocyanate compound), the obtained laminate on the barrier layer side and the heat-sealable resin layer were bonded to each other by a dry lamination method to laminate an adhesive layer (3 µm) and a heat-sealable resin layer (50 µm) on the barrier layer. Next, the obtained laminate was aged and heated to obtain an exterior material (1) including a laminate in which a base material layer (polyethylene terephthalate film (25 µm)), an adhesive agent layer (cured product of two-liquid curable urethane adhesive (3 µm)), a barrier layer (aluminum alloy foil (40 µm)), an adhesive layer (cured product of two-liquid curable urethane adhesive (3 µm)) and a heat-sealable resin layer (polybutylene terephthalate film (50 µm)) were laminated in this order.

### (Exterior material (2) using PP as heat-sealable resin layer)

Except that as the heat-sealable resin layer, a polypropylene film (thickness: 50 µm) was used instead of the polybutylene terephthalate film (thickness: 50 µm), the same procedure as in the case of the exterior material (1) was carried out to obtain an exterior material (2).

### (Exterior material (3) using PBT containing water absorbent as heat-sealable resin layer)

Except that as the heat-sealable resin layer, a polybutylene terephthalate film (thickness: 50 µm) containing a water absorbent (calcium oxide) in an amount of 40 mass% was used instead of the polybutylene terephthalate film (thickness: 50 µm), the same procedure as in the case of the exterior material (1) was carried out to obtain an exterior material (3).

### (Exterior material (4) using PP containing water absorbent as heat-sealable resin layer)

Except that as the heat-sealable resin layer, a polypropylene film (thickness: 50 µm) containing a water absorbent (calcium oxide) in an amount of 40 mass% was used instead of the polybutylene terephthalate film (thickness: 50 µm), the same procedure as in the case of the exterior material (2) was carried out to obtain an exterior material (4).

### <Evaluation of heat resistance and pressure resistance (insulation quality)>

Using the obtained exterior materials (1) and (2) and the resin films for electrical storage devices from Examples 1A and 12A, insulation quality was evaluated by the following procedure. Here, insulation quality was evaluated with a combination of the exterior material (1) (using PBT as a heat-sealable resin layer) and Example 12A (using PP as a resin of a water absorbing layer) and a combination of the exterior material (2) (using PP as a heat-sealable resin layer) and Example 1A (using PBT as a resin of a water absorbing layer). Further, for the exterior materials (3) and (4), insulation quality was evaluated by the following procedure without using the resin film for electrical storage devices because a water absorbent was blended in the heat-sealable resin layer. The evaluation of insulation quality in the case of use of the exterior material (3) was designated as Reference Example 1, and the evaluation of heat resistance and pressure resistance (insulation quality) in the case of use of the exterior material 3 was designated as Reference Example 2. The results are shown in Table 5A.

The exterior materials (1) to (4) were each cut into two pieces of 30 mm square. In addition, the resin films for electrical storage devices from Examples 1A and 12A were each cut into two pieces of 30 mm square. Next, two resin films for electrical storage devices were disposed between two exterior materials. Here, the two resin films for electrical storage devices were disposed on the heat-sealable resin layer side of the exterior material. Next, the two resin films for electrical storage devices were brought into contact with each other, and a stainless steel sheet (3 mm in thickness, 26 mm square) was sandwiched between the two resin films for electrical storage devices. Next, a metal wire having a diameter of 25 µm was inserted between one of the resin films for electrical storage devices and the stainless steel sheet to obtain a laminate. Next, a pressure of 100 MPa was applied from both sides of the exterior material of the obtained laminate using a restricting tool, and in this state, the laminate was put in an oven at 120°C, and stored for 6 hours. A cushioning material was inserted between the restraint jig and the exterior material on each side so that pressure was uniformly applied to the laminate from both sides of the exterior material. After 6 hours, the exterior material was observed to confirm whether the metal wire was in contact with the barrier layer of the exterior material, and insulation quality was evaluated on the basis of the following criteria. As for whether or not the metal wire was in contact with the barrier layer after the heat and pressure test was conducted, the sample after the test was cut in the thickness direction using a microtome (REM-710 Retoratome manufactured by YAMATO KOKI INDUSTRIAL CO., LTD.), and the obtained crosssection was observed with a laser microscope (VK-9700 manufactured by KEYENCE CORPORATION). As described above, the heat resistance and the pressure resistance (insulation quality) were evaluated without disposing the resin film for electrical storage devices when the exterior materials 3 and 4 were used. The evaluation criteria for insulation quality are as follows. When the barrier layer and the metal wire are in contact with each other, a short-circuit easily occurs.

A: The barrier layer of the exterior material and the metal wire are not in contact with each other.

C: The barrier layer of the exterior material and the metal wire are in contact with each other.

### <Evaluation of sealing strength>

The exterior materials (1) to (4) were each cut into two pieces having a size of 6 cm × 15 cm. In addition, the resin films for electrical storage devices from Examples 1A and 12A were each cut into two pieces having a size of 6 cm × 15 cm. Next, two resin films for electrical storage devices were disposed between two exterior materials to obtain a laminate. Here, the two resin films for electrical storage devices were disposed on the heat-sealable resin layer side of the exterior material. A region of 6 cm × 7 mm of the obtained laminate was heat-sealed from both sides of the laminate under the following conditions using a heat seal tester (TP-701-A manufactured by Tester Sangyo Co., Ltd.). An end part of the laminate was not bonded because it was not heat-sealed. Thus, a forked test piece for peeling strength was produced. The test piece was cut into a strip shape with a width of 15 mm, each of the two separate end parts was attached to a tensile tester, the peel strength (N/15 mm) was measured under the following conditions, and acceptance-rejection assessment was performed on the basis of the following acceptance-rejection criteria. The results are shown in Table 5A.

(Heat-sealing conditions)
   Temperature: 240°C
   Pressure: 1 MPa
   Time: 3 sec
(Peeling conditions)
   Test speed: 300 mm/min
   Chuck-to-chuck distance: 50 mm.
   Load range: 50 N
   Temperature: 25°C
(Acceptance-rejection criteria)
   A: Very good and acceptable, with a peeling strength of 40 N/15 mm or more
   B: Acceptable, with a peeling strength of 30 N/15 mm or more and less than 40 N/15 mm
   C: Unacceptable, with a peeling strength of less than 30 N/15 mm

**[Table 5A]**

| Table 5A | Water absorbing layer of resin film for electrical storage devices | Exterior material used for evaluation | | Evaluation of heat resistance and pressure resistance (insulation quality) | Evaluation of sealing property (25°C) |
|---|---|---|---|---|---|
| Example 1A | PBT | Exterior material (2) | PP as heat-sealable resin layer | A | A |
| Example 12A | PP | Exterior material (1) | PBT as heat-sealable resin layer | A | A |
| Reference Example 1 | - | Exterior material (4) | PP (containing water absorbent) as heat-sealable resin layer | C | B |
| Reference Example 2 | - | Exterior material (3) | PBT (containing water absorbent) as heat-sealable resin layer | A | B |

### <Evaluation of suppression of ingress of moisture (mainly moisture contained in pouch)

A laminate obtained by bonding an aluminum foil (thickness: 40 µm) and a polybutylene terephthalate film (thickness: 40 µm), which had been corona-treated on one surface thereof, with an adhesive (polyolefin-based adhesive resin) was cut into a size of 120 mm × 120 mm. The obtained laminate was folded in half, and heat-sealed on two sides at 10 mm from the end to produce a pouch. The heat-sealing conditions were set to 240°C, 1 MPa and 3 seconds. The resin films for electrical storage devices (size: 5 cm × 5 cm) used in examples and reference examples shown in Table 6A were each put in the pouch. Next, the pouch was hermetically sealed by heat-sealing a portion of 10 mm from the end on the other one side of the pouch which had not been heat-sealed. The end part was cut off so that the sealed portion had a width of 5 mm. The pouch was placed in an oven at 120°C for 3 hours, and the amount of moisture contained in about 0.15 g of the pouch was measured with a Karl Fischer moisture meter. All operations were performed in a dry room. The results are shown in Table 6A.

**[Table 6A]**

| Table 6A | Water absorbing layer of resin film for electrical storage devices | Location of water absorbing layer | Moisture concentration in pouch after 3 hours at 120°C (ppm) |
|---|---|---|---|
| Example 5A | PBT | Second layer | 443 |
| Example 8A | PBT | First layer | 534 |
| Example 9A | PBT | Third layer | 315 |
| Example 15A | PP | Second layer | 892 |
| Example 19A | PP | First layer | 922 |
| Example 20A | PP | Third layer | 626 |
| Reference Example 3 | PBT | None | 951 |
| Reference Example 4 | PP | None | 948 |

### Calculation of number of years during which moisture can be absorbed in packaging

A laminate obtained by bonding an aluminum foil (thickness: 40 µm) and a polybutylene terephthalate film (thickness: 40 µm), which had been corona-treated on one surface thereof, with an adhesive (polyolefin-based adhesive resin) was cut into a size of 120 mm × 120 mm. The obtained laminate was folded in half, and heat-sealed on two sides at 10 mm from the end to produce a pouch. The heat-sealing conditions were set to 240°C, 1 MPa and 3 seconds. 10 g of calcium chloride was put in the pouch, and the other one side was heat-sealed under the above-described heat-sealing conditions. The length of one side of the portion surrounded by heat-sealed portion was 100 mm, and the seal width was 5 mm. The weight of the obtained packaging was measured, the packaging was stored in a constant-temperature and constant-humidity bath at 40°C and 90%, and the weight was measured on a regular basis. The amount of increase in weight of the packaging was regarded as the weight of moisture having permeated the polybutylene terephthalate film, and the moisture permeability coefficient of each packaging was obtained. Next, two 10 cm² resin films for electrical storage devices in each of Examples 1A and 12A and Reference Examples 5 and 6 were placed in a packaging, and the number of years during which it is possible to absorb moisture was calculated from the amount of moisture absorbed by the absorbent and each moisture permeability coefficient obtained as described above. In Reference Example 5, the same resin film for electrical storage devices as in Example 1A was placed in the exterior material (1). In Reference Example 6, the same resin film for electrical storage devices as in Example 12A was placed in the exterior material (2). The results are shown in Table 7A.

**[Table 7A]**

| Table 7A | Water absorbing layer of resin film for electrical storage devices | Exterior material used for evaluation | | Number of years during which absorption is possible |
|---|---|---|---|---|
| Example 1A | PBT | Exterior material (2) | PP as heat-sealable resin layer | 26 |
| Reference Example 5 | PBT | Exterior material (1) | PBT as heat-sealable resin layer | 11 |
| Example 12A | PP | Exterior material (1) | PBT as heat-sealable resin layer | 11 |
| Reference Example 6 | PP | Exterior material (2) | PP as heat-sealable resin layer | 26 |

The present disclosure will be described in detail below by giving examples and comparative examples related to the second embodiment of the present disclosure. However, the present disclosure is not limited to examples.

### <Sulfur-based gas absorbent>

Water sulfur-based gas absorbents used in examples are as follows.

### [Chemical sulfur-based gas absorbent]

- Chemical sulfur-based gas absorbent 1: Dushlite CZU, metal oxide-carrying inorganic porous material manufactured by Sinanen Zeomic Co., Ltd. Copper oxide/zinc oxide combined aluminosilicate average particle size: 3 to 5 µm.
- Chemical sulfur-based gas absorbent 2: Dushlite ZU, metal oxide-carrying inorganic porous material manufactured by Sinanen Zeomic Co., Ltd. Zinc oxide combined aluminosilicate average particle size: 3 to 5 µm.
- Chemical sulfur-based gas absorbent 3: DEOGLA, copper-kneaded glass manufactured by Ishizuka Glass Co., Ltd. average particle size: 3 to 4 µm.

### [Physical sulfur-based gas absorbent]

- Physical sulfur-based gas absorbent 1: MIZUKASIEVES EX-122, hydrophobic zeolite manufactured by Mizusawa Industrial Chemicals, Ltd. molar ratio of SiO₂ to Al₂O₃: 3211, average particle size: 2.5 to 5.5 µm.
- Physical sulfur-based gas absorbent 2: SILTON MT100, hydrophobic zeolite manufactured by Mizusawa Industrial Chemicals, Ltd. molar ratio of SiO₂ to Al₂O₃: 100/1, average particle size: 3 to 4.5 µm.
- Physical sulfur-based gas absorbent 3: SILTON MT400, hydrophobic zeolite manufactured by Mizusawa Industrial Chemicals, Ltd. molar ratio of SiO₂ to Al₂O₃: 400/1, average particle size: 5 to 7 µm.
- Physical sulfur-based gas absorbent 4: BENCLAY MK-101, bentonite manufactured by Mizusawa Industrial Chemicals, Ltd. average particle size: 4.5 µm, pH = 10.4.
- Physical sulfur-based gas absorbent 5: ADEPLUS FJ, hydrophobic zeolite manufactured by Mizusawa Industrial Chemicals, Ltd. average particle size: 5.8 µm, pH = 9.3.

### <Manufacturing of PBT masterbatch>

Each PBT masterbatch was prepared by uniformly mixing heated and melted polybutylene terephthalate (PBT) and each sulfur-based gas absorbent so as to meet the composition (mass ratio) shown in Table 1B. Eight types of PBT masterbatches, i.e., "PBT MB1", "PBT MB2", "PBT MB3", "PBT MB4", "PBT MB5", "PBT MB6", "PBT MB7" and "PBT MB8" were obtained. The masterbatches each have a pellet shape.

**[Table 1B]**

| Table 1B | | | PBT masterbatch | | | | | | | |
|---|---|---|---|---|---|---|---|---|---|---|
| | | | PBT MB1 | PBT MB2 | PBT MB3 | PBT MB4 | PBT MB5 | PBT MB6 | PBT MB7 | PBT MB8 |
| PBT (parts by mass) | | | 60 | 60 | 60 | 60 | 60 | 60 | 60 | 60 |
| Sulfur-based gas absorbent (parts by mass) | Chemical sulfur-based gas absorbent | 1 | 40 | - | - | - | - | - | - | - |
| | | 2 | - | 40 | - | - | - | - | - | - |
| | | 3 | - | - | 40 | - | - | - | - | - |
| | Physical sulfur-based gas absorbent | 1 | - | - | - | 40 | - | - | - | - |
| | | 2 | - | - | - | - | 40 | - | - | - |
| | | 3 | - | - | - | - | - | 40 | - | - |
| | | 4 | - | - | - | - | - | - | 40 | - |
| | | 5 | - | - | - | - | - | - | - | 40 |

### <Manufacturing of resin film for electrical storage devices)

### (Examples 1B to 11B and Comparative Example 1B)

Resin films for electrical storage devices (each having a total thickness of 40 µm), whose laminated configurations are shown in Table 2B, were manufactured by extrusion molding. In the resin film for electrical storage devices, a layer containing a sulfur gas absorbent was a sulfur gas absorbing layer. The sulfur gas absorbing layer was formed by heating and melting and uniformly mixing each of the obtained PBT masterbatches (pellets) and polybutylene terephthalate (PBT) so as to meet the formulation (mass ratio) shown in Table 2B, and extrusion-molding the mixture. Layers other than the sulfur gas absorbing layer is a layer formed of polybutylene terephthalate (PBT). Those layers were formed by extrusion molding together with the sulfur gas absorbing layer (co-extrusion molding). In the laminated configuration of the resin film for electrical storage devices, the first layer is disposed on the exterior material side, the third layer is a layer disposed on the electrical storage device element side, and the second layer is a layer located between the first layer and the third layer. Examples 1B to 8B and 11B have a three-layered configuration in which a first layer, a second layer and a third layer are laminated in this order, and in Examples 1B to 8B and 11B, the second layer is a sulfur gas absorbing layer. Example 9B had a two-layered configuration in which a second layer and a third layer are laminated, with the second layer being a sulfur-based gas absorbing layer. Example 10 had a single-layered configuration with a second layer, with the second layer being a sulfur-based gas absorbing layer.

### <Evaluation>

### [Film formability]

The appearance of the resin film for electrical storage devices was visually observed, and whether or not there were defects was evaluated on the basis of the following evaluation criteria. The results are shown in Table 2B.
A: There were no wrinkles, bumps and delamination in the laminate.
C: There were wrinkles, bumps and/or delamination in the laminate.

### <Sulfur-based gas concentration>

The resin film was cut into 20 × 20 cm, and 1,000 ml of a test gas adjusted to a relative humidity of 80% RH or more and 30 ppm of hydrogen sulfide and 50 ppm of dimethyl sulfide as sulfur-based gas components, and a humidity data logger (TR-72wf from T&D Corporation) were put in a gas sampling back (SMARTBAGPA series manufactured by GL Sciences Inc.), and left standing at 25°C for 2 days, i.e., 48 hours, followed by measurement of the relative humidity and the concentrations of hydrogen sulfide and dimethyl sulfide. The concentrations of hydrogen sulfide and dimethyl sulfide were measured with a detection tube.

### [Evaluation with exterior material]

### <Manufacturing of exterior material>

As a base material layer, a polyethylene terephthalate film (25 µm) was provided in which a surface to be bonded had been corona-treated. In addition, an aluminum alloy foil (JIS H4160: 1994 A8021 H-O (thickness: 40 µm)) was provided as a barrier layer. As a heat-sealable resin layer, a polybutylene terephthalate film (thickness: 50 µm) was provided in which a surface to be bonded had been corona-treated. Using a two-liquid curable urethane adhesive (polyester polyol and alicyclic isocyanate compound), the base material layer and the barrier layer were bonded to each other by a dry lamination method to produce a laminate of a base material layer (25 µm), an adhesive agent layer (3 µm) and a barrier layer (40 µm). Next, using a two-liquid curable urethane adhesive (polyester polyol and alicyclic isocyanate compound), the obtained laminate on the barrier layer side and the heat-sealable resin layer were bonded to each other by a dry lamination method to laminate an adhesive layer (3 µm) and a heat-sealable resin layer (50 µm) on the barrier layer. Next, the obtained laminate was aged and heated to obtain an exterior material including a laminate in which a base material layer (polyethylene terephthalate film (25 µm)), an adhesive agent layer (cured product of two-liquid curable urethane adhesive (3 µm)), a barrier layer (aluminum alloy foil (40 µm)), an adhesive layer (cured product of two-liquid curable urethane adhesive (3 µm)) and a heat-sealable resin layer (polybutylene terephthalate film (50 µm)) were laminated in this order.

### <Evaluation of sealing strength>

The exterior material was cut to provide two pieces having a size of 6 cm × 15 cm. In addition, the resin films for electrical storage devices from Examples 1B to 11B and Comparative Example 1B were each cut into two pieces having a size of 6 cm × 15 cm. Next, two resin films for electrical storage devices were disposed between two exterior materials to obtain a laminate. Here, the two resin films for electrical storage devices were disposed on the heat-sealable resin layer side of the exterior material. A region of 6 cm × 7 mm of the obtained laminate was heat-sealed from both sides of the laminate under the following conditions using a heat seal tester (TP-701-A manufactured by Tester Sangyo Co., Ltd.). An end part of the laminate was not bonded because it was not heat-sealed. Thus, a forked test piece for peeling strength was produced. The test piece was cut into a strip shape with a width of 15 mm, each of the two separate end parts was attached to a tensile tester, the peel strength (N/15 mm) was measured under the following conditions, and acceptance-rejection assessment was performed on the basis of the following acceptance-rejection criteria. The results are shown in Table 2B.

(Heat-sealing conditions)
   Temperature: 240°C
   Pressure: 1 MPa
   Time: 3 sec
(Peeling conditions)
   Test speed: 300 mm/min
   Chuck-to-chuck distance: 50 mm.
   Load range: 50 N
   Temperature: 25°C
(Acceptance-rejection criteria)
   A: Very good and acceptable, with a peeling strength of 40 N/15 mm or more
   B: Acceptable, with a peeling strength of 30 N/15 mm or more and less than 40 N/15 mm
   C: Unacceptable, with a peeling strength of less than 30 N/15 mm

**[Table 2B]**

| Table 2B | | | | | Example | | | | | | | | | | | Comparative Example |
|---|---|---|---|---|---|---|---|---|---|---|---|---|---|---|---|---|
| | | | | | 1B | 2B | 3B | 4B | 5B | 6B | 7B | 8B | 9B | 10B | 11B | 1B |
| Sulfur-based gas absorbing layer | Formulation (mass ratio) | Masterbatch | PBT MB1 | | 12.5 | - | - | - | - | - | - | 6.25 | 6.25 | 74.0 | 1.5 | - |
| | | | PBT MB2 | | - | 12.5 | - | - | - | - | - | - | - | - | - | - |
| | | | PBT MB3 | | - | - | 12.5 | - | - | - | - | - | - | - | - | - |
| | | | PBT MB4 | | - | - | - | 12.5 | - | - | - | - | - | - | - | - |
| | | | PBT MB5 | | - | - | - | - | - | - | - | 6.25 | 6.25 | - | - | - |
| | | | PBT MB6 | | - | - | - | - | 12.5 | - | - | - | - | - | - | - |
| | | | PBT MB7 | | - | - | - | - | - | 12.5 | - | - | - | - | - | - |
| | | | PBT MB8 | | - | - | - | - | - | - | 12.5 | - | - | - | - | - |
| | | Resin | PBT | | 87.5 | 87.5 | 87.5 | 87.5 | 87.5 | 87.5 | 87.5 | 87.5 | 87.5 | 26.0 | 98.5 | - |
| | | Total | | | 100.0 | 100.0 | 100.0 | 100.0 | 100.0 | 100.0 | 100.0 | 100.0 | 100.0 | 100.0 | 100.0 | - |
| | Raw material composition | Resin | PBT | | 95.0 | 95.0 | 95.0 | 95.0 | 95.0 | 95.0 | 95.0 | 95.0 | 95.0 | 70.4 | 99.4 | - |
| | | Sulfur-based gas absorbent | Chemical sulfur-based gas absorbent | 1 | 5.0 | - | - | - | - | - | - | 2.5 | 2.5 | 29.6 | 0.6 | - |
| | | | | 2 | - | 5.0 | - | - | - | - | - | - | - | - | - | - |
| | | | | 3 | - | - | 5.0 | - | - | - | - | - | - | - | - | - |
| | | | Physical sulfur-based gas absorbent | 1 | - | - | - | 5.0 | - | - | - | - | - | - | - | - |
| | | | | 2 | - | - | - | - | - | - | - | 2.5 | 2.5 | - | - | - |
| | | | | 3 | - | - | - | - | 5.0 | - | - | - | - | - | - | - |
| | | | | 4 | - | - | - | - | - | 5.0 | - | - | - | - | - | - |
| | | | | 5 | - | - | - | - | - | - | 5.0 | - | - | - | - | - |
| Resin film for electrical storage devices | Laminated configuration | First layer | (µm) | | 10 | 10 | 10 | 10 | 10 | 10 | 10 | 10 | - | - | 10 | - |
| | | Second layer (intermediate layer) | (µm) | | 20 | 20 | 20 | 20 | 20 | 20 | 20 | 20 | 20 | 40 | 20 | - |
| | | Third layer | (µm) | | 10 | 10 | 10 | 10 | 10 | 10 | 10 | 10 | 20 | - | 10 | 40 |
| | | Location of sulfur-based gas absorbing layer | | | Second layer | Second layer | Second layer | Second layer | Second layer | Second layer | Second layer | Second layer | Second layer | Second layer | Second layer | - |
| | Evaluation | Film formability | | | A | A | A | A | A | A | A | A | A | A | A | A |
| | | Evaluation of sealing strength (240°C) | | | A | A | A | A | A | A | A | A | A | A | A | A |
| | | Sulfur-based gas absorbing property | Hydrogen sulfide concentration (ppm) | | 2.3 | 2.3 | 2.3 | 23.3 | 11.3 | 11.3 | 14.3 | 3.5 | 3.5 | 0.0 | 20.0 | 30.0 |
| | | | Dimethyl sulfide concentration (ppm) | | 3.8 | 28.2 | 46.3 | 43.8 | 18.8 | 23.8 | 28.8 | 15.0 | 15.0 | 0.0 | 30.0 | 50.0 |

As described above, the first embodiment of the present disclosure provides the invention of aspects as shown below.

Item 1A. A resin film for electrical storage devices which is disposed between an exterior material of an electrical storage device and an electrical storage device element, the resin film including a water absorbent.

Item 2A. The resin film for electrical storage devices according to item 1A, in which the water absorbent is an inorganic water absorbent.

Item 3A. The resin film for electrical storage devices according to item 1A or 2A, in which the inorganic water absorbent is at least one selected from the group consisting of calcium oxide, anhydrous magnesium sulfate, magnesium oxide, calcium chloride, zeolite, aluminum oxide, silica gel, alumina gel, and dried alum.

Item 4A. The resin film for electrical storage devices according to any one of items 1A to 3A, in which a content of the water absorbent is 0.1 parts by mass or more based on 100 parts by mass of the resin contained in the resin film for electrical storage devices.

Item 5A. The resin film for electrical storage devices according to any one of items 1A to 4A, including two or more layers.

Item 6A. The resin film for electrical storage devices according to item 5A, in which among the two or more layers, at least one layer contains the water absorbent, and at least one layer contains a sulfur-based gas absorbent.

Item 7A. The resin film for electrical storage devices according to any one of items 1A to 6A, in which the layer of the resin film for electrical storage devices, which contains the water absorbent, contains 0.5 masses or more of the absorbent based on 100 parts by mass of the resin.

Item 8A. The resin film for electrical storage devices according to any one of items 1A to 7A, including a heat-sealable resin.

Item 9A. The resin film for electrical storage devices according to item 8A, in which the heat-sealable resin contains at least one selected from the group consisting of polyester and polyolefin.

Item 10A. An electrical storage device in which an electrical storage device element including at least a positive electrode, a negative electrode and an electrolyte is housed in a packaging formed of an exterior material, in which
the resin film for electrical storage devices according to any one of items 1A to 9A is disposed between the exterior material and the electrical storage device.

The second embodiment of the present disclosure provides the invention of aspects as shown below.

Item 1B.A resin film for electrical storage devices which is disposed between an exterior material of an electrical storage device and an electrical storage device element, the resin film including a sulfur-based gas absorbent.

Item 2B.The resin film for electrical storage devices according to item 1B, in which a content of the sulfur-based gas absorbent is 0.1 parts by mass or more based on 100 parts by mass of the resin contained in the resin film for electrical storage devices.

Item 3B.The resin film for electrical storage devices according to item 1B or 2B, in which the sulfur-based gas absorbent has a maximum particle size of 20 µm or less and a number average particle size of 0.1 µm or more and 15 µm or less.

Item 4B.The resin film for electrical storage devices according to any one of items 1B to 3B, in which the sulfur-based gas absorbent contains at least one selected from the group consisting of a chemical sulfur-based gas absorbent and a physical sulfur-based gas absorbent.

Item 5B.The resin film for electrical storage devices according to item 4B, in which the physical sulfur-based gas absorbent contains at least one selected from the group consisting of hydrophobic zeolite, bentonite and sepiolite in which a molar ratio of SiO₂ to Al₂O₃ is 1/1 to 2000/1.

Item 6B.The resin film for electrical storage devices according to item 4B or 5B, in which the chemical sulfur-based gas absorbent is a metal oxide, or an inorganic substance carrying or containing a metal or metal ions.

Item 7B.The resin film for electrical storage devices according to item 6B, in which the metal oxide contains at least one selected from the group consisting of CuO, ZnO and AgO.

Item 8B.The resin film for electrical storage devices according to item 6B or 7B, in which the metal species in the inorganic substance carrying or containing a metal or metal ions is at least one selected from the group consisting of Ca, Mg, Na, Cu, Zn, Ag, Pt, Au, Fe, Al and Ni.

Item 9B.The resin film for electrical storage devices according to any one of items 1B to 8B, in which the layer of the resin film for electrical storage devices, which contains the sulfur-based gas absorbent, contains 5 masses or more of the sulfur-based gas absorbent based on 100 parts by mass of the resin.

Item 10B. The resin film for electrical storage devices according to any one of items 1B to 9B, including a heat-sealable resin.

Item 11B. The resin film for electrical storage devices according to item 10B, in which the heat-sealable resin contains at least one selected from the group consisting of polyester and polyolefin.

Item 12B. An electrical storage device in which an electrical storage device element including at least a positive electrode, a negative electrode and an electrolyte is housed in a packaging formed of an exterior material, in which
the resin film for electrical storage devices according to any one of items 1B to 11B is disposed between the exterior material and the electrical storage device.

### DESCRIPTION OF REFERENCE SIGNS

1: Resin film for electrical storage devices
2: Metal terminal
3: Exterior material
3a: Peripheral edge portion of exterior material
4: Electrical storage device element
10: Electrical storage device
11: First layer
12: Second layer
13: Third layer
21: Adhesive film for metal terminal
31: Base material layer
32: Adhesive agent layer
33: Barrier layer
34: Adhesive layer
35: Heat-sealable resin layer

## Claims

1. A resin film for electrical storage devices which is disposed between an exterior material of an electrical storage device and an electrical storage device element, the resin film comprising a water absorbent.

2. The resin film for electrical storage devices according to claim 1, wherein the water absorbent is an inorganic water absorbent.

3. The resin film for electrical storage devices according to claim 1 or 2, wherein the inorganic water absorbent is at least one selected from the group consisting of calcium oxide, anhydrous magnesium sulfate, magnesium oxide, calcium chloride, zeolite, aluminum oxide, silica gel, alumina gel, and dried alum.

4. The resin film for electrical storage devices according to claim 1 or 2, wherein a content of the water absorbent is 0.1 parts by mass or more based on 100 parts by mass of the resin contained in the resin film for electrical storage devices.

5. The resin film for electrical storage devices according to claim 1 or 2, comprising two or more layers.

6. The resin film for electrical storage devices according to claim 5, wherein among the two or more layers, at least one layer contains the water absorbent, and at least one layer contains a sulfur-based gas absorbent.

7. The resin film for electrical storage devices according to claim 1 or 2, wherein the layer of the resin film for electrical storage devices, which contains the water absorbent, contains 0.5 masses or more of the absorbent based on 100 parts by mass of the resin.

8. A resin film for electrical storage devices which is disposed between an exterior material of an electrical storage device and an electrical storage device element, the resin film comprising a sulfur-based gas absorbent.

9. The resin film for electrical storage devices according to claim 8, wherein a content of the sulfur-based gas absorbent is 0.1 parts by mass or more based on 100 parts by mass of the resin contained in the resin film for electrical storage devices.

10. The resin film for electrical storage devices according to claim 8 or 9, wherein the sulfur-based gas absorbent has a maximum particle size of 20 µm or less and a number average particle size of 0.1 µm or more and 15 µm or less.

11. The resin film for electrical storage devices according to claim 8 or 9, wherein the sulfur-based gas absorbent contains at least one selected from the group consisting of a chemical sulfur-based gas absorbent and a physical sulfur-based gas absorbent.

12. The resin film for electrical storage devices according to claim 11, wherein the physical sulfur-based gas absorbent contains at least one selected from the group consisting of hydrophobic zeolite, bentonite and sepiolite in which a molar ratio of SiO₂ to Al₂O₃ is 1/1 to 2000/1.

13. The resin film for electrical storage devices according to claim 11, wherein the chemical sulfur-based gas absorbent is a metal oxide, or an inorganic substance carrying or containing a metal or metal ions.

14. The resin film for electrical storage devices according to claim 13, wherein the metal oxide contains at least one selected from the group consisting of CuO, ZnO and AgO.

15. The resin film for electrical storage devices according to claim 13, wherein the metal species in the inorganic substance carrying or containing a metal or metal ions is at least one selected from the group consisting of Ca, Mg, Na, Cu, Zn, Ag, Pt, Au, Fe, Al and Ni.

16. The resin film for electrical storage devices according to claim 8 or 9, wherein the layer of the resin film for electrical storage devices, which contains the sulfur-based gas absorbent, contains 5 masses or more of the sulfur-based gas absorbent based on 100 parts by mass of the resin.

17. The resin film for electrical storage devices according to claim 1 or 8, comprising a heat-sealable resin.

18. The resin film for electrical storage devices according to claim 17, wherein the heat-sealable resin contains at least one selected from the group consisting of polyester and polyolefin.

19. An electrical storage device in which an electrical storage device element including at least a positive electrode, a negative electrode and an electrolyte is housed in a packaging formed of an exterior material, in which
the resin film for electrical storage devices according to claim 1 or 8 is disposed between the exterior material and the electrical storage device.
